# EUROPEAN PATENT APPLICATION

(11) **EP 4 732 651 A1**
(43) Date of publication of application: **29.04.2026**
(21) Application number: 24209017.3
(22) Date of filing: 25.10.2024
(51) Int. Cl.: A01C 1/06, A01N 25/00, A01N 25/14, A01N 63/22, A01P 21/00, C05F 11/08

(54) **COATED SEED**

(71) Applicant: Earth Alive Clean Technologies Inc., Montréal, Québec H2Z 1S4 (CA)
(72) Inventor: TOUSSAINT, Claudia, Montreal, H2Z 1S4 (CA); NEUFELD, Simon, Montreal, H2Z 1S4 (CA); SAFINA, Gulnaz, Montreal, H2Z 1S4 (CA); ANCIAUX, Diego Roland Pol Stéphane Ghislain, 5081 Meux (BE)
(74) Representative: Calysta NV

(57) **Abstract**

Coated seed comprising at least a seed and at least a coating, said coating comprises at least a binding agent and a soil activator composition having an extended shelf-life duration and comprising from 91.8 to 99.8 weight% of at least one lignosulfonate salt with respect to the total weight of the soil activator composition, from 0.2 to 8.2 weight % of a bacterial mixture with respect to the total weight of the soil activator composition, said bacterial mixture containing at least 3 different bacteria species with one or more nitrogen fixing bacteria species and one or more phosphorus solubilizing bacteria species, and containing at least 263 million (2.63×10⁸) cfu total bacteria /g soil activator composition after said extended shelf life measured according to ASTM-D5465-93 (dated 1998) standard.

## Description

The present invention relates to a coated seed comprising at least a seed and at least a coating, said seed is chosen in the group comprising seed of cotton, seed of maize/corn, seed of soybean, seed of rice, seed of sunflower, seed of tomato, seed of wheat, said coating comprises at least a binding agent and a soil activator composition having an extended shelf-life duration.

The present invention also concerns a method for preparing a coated seed according to the invention.

The present invention also relates to the utilization of said coated seed to improve the germination of said seed and/or to improve plant establishment from said seed and/or improve growth rate from said seed and/or to improve roots growth rate from said seed.

The use of seeds for agriculture dates back thousands of years, when early farmers collected the seeds from the most productive and resilient plants in order to plant them again and increase theiryield. Overtime, this practice evolved with different civilizations. Moreover, with the expansion of global exploration, the exchange of seeds between continents through trade routes has led to the diversification of crops worldwide. The 20th century saw significant advances in seed science, with the advent of hybridization, genetic modification, and precision breeding to improve yields, pest resistance, and climate adaptability. Today, seed technology continues to evolve with innovations in biotechnology and sustainability efforts, ensuring global food security and adapting to the challenges of climate change.

For example, considering crops from the abovementioned seeds according to the invention, namely seed of cotton, seed of maize/corn, seed of soybean, seed of rice, seed of sunflower, seed of tomato, seed of wheat, these crops represent a production of approximately 3353 million of tons for the year 2020 (source FAOstats, Food and Agriculture Organization), with approximately 83 million of tons for cotton, 1162 million of tons for maize/corn, 353 million of tons for soybean, 757 million of tons for rice, 50 million of tons for sunflower, 187 million of tons for tomato and 761 million of tons for wheat.

It is easy to understand that these harvests represent a major challenge on a world global scale, whether for food, oil production or the production of plant-based textile fibers. Moreover, rice and wheat represent the two most important staple foods for human consumption globally. Corn, soybean and sunflower are key in animal feed, food production and biofuel. Cotton is one of the most important natural fibers in global markets.

In addition, it has recently come to light that these crops, which are essential to humanity on a world global scale, are being put under crucial pressure due to geo-political crises, tensions between countries, inflation, economic disorder and environmental disruption.

It is clear, then, that the agricultural sector as a whole, in particular manufacturers, producers and farmers are constantly on the lookout for solutions to improve their harvest, production and yield.

It has been shown that crop establishment is one of the most critical phenological stages in the life cycle of crop plants, which is governed by the quality of the seed prior to sowing and, unfortunately for farmers, many factors can have a negative impact on this stage such as environmental conditions or the intrinsic characteristics of the seed/plant.

To solve or at least partially solve this problem, physical properties of seed can be modified by the application of a coating to the surface of the seed using methods such as dressing, film coating, encrusting or pelleting. These technologies are now widespread and offer numerous advantages that improve both the efficiency and success of agricultural practices, for example by improving germination rates, advancing phenological events, enhancing physio-morphological attributes and yields.

Seed coatings have been used as means for protecting and enhancing the environment next to the pericarp of the seed (impacting the microenvironment of the seed), to control seed germination, and/or improve seedling survival and growth rate.

Indeed, seeds with superior physiological qualities are always demanded by farmers and coating can, for example, shield seeds from abiotic environmental stresses (temperatures, drought, etc.). Additionally, coatings can also include fungicides and/or insecticides that protect the seed against biotic stresses caused by diseases and insects. Another major benefit of seed coatings is the ability to incorporate other additives like nutrients, growth regulators or stimulants, or beneficial elements, in order to improve seed germination, seedling survival and growth in the face of diseases, insects, low soil pH and poor soil fertility. Finally, coatings also improve seed handling and sowing efficiency by enhancing the physical properties of the seeds, making them more uniform in size, easier to plant, less dusty, reducing seed waste and offering increased storage and transport options.

It is therefore easy to see that coating technologies are constantly being improved, and that this subject is of growing interest to manufacturers, the farming community and end consumers alike.

Regarding coating technologies, it is well known, for example, that film coating technology involves applying a thin layer (generally up to 5 wt% of seed weight) of a beneficial coating agent directly on the surface of the seed, which can be a solution for improving quality and protecting the seed and seedling from various stresses.

It is also known the encrusting technology involving the application of seed coating (generally from 8 wt% up to 500 wt% of seed weight) with less or no impact on the initial shape of the seed, showing a beneficial effect for the delivery of beneficial elements or microbes impacting the microenvironment of the seed but also to improve the storage and transportation of the encrusted seeds.

A third coating technology consists of the pelleting of seed resulting in a process of increasing seed size (generally from 500 wt% up to 5000 wt% of seed weight) with high impact on the initial shape of the seed. Indeed the advantage of pelleting seed is the ability to coat small or irregularly shaped seeds to increase their size, uniformity and weight, resulting in greater precision in planting when using mechanical seeders or precision planting equipment, ease of handling (storage, transportation and planting), increased germination rates, protection against environmental stress, reduced seed waste, better storage and longevity and the possibility of customization for specific needs, for example using specific nutrients, growth regulators, or biostimulants.

Furthermore, the use of seeds in agriculture, manufactured by industrials and used by the farming community, is closely linked to the use of fertilizers, as fertilizers play a crucial role in plant development by compensating for nutrient deficiencies in the soil. The primary objective of fertilizers is to stimulate vegetative growth, increase yields and promote plant health.

As explained above, it has been made possible to coat seeds with additives like for example nutrients, growth regulators or stimulants, beneficial elements, or even more with fertilizer-type additives to protect the seed and help and promote plant development.

Generally speaking, there exist three main types of fertilizers, inorganic fertilizers, organic fertilizers, biofertilizers and their mixture.

For example, inorganic fertilizers are made of substances of mineral origin. Some of them are produced by exploiting natural deposits such as crushed rocks like lava dust, serpentine and basaltic powder. Others are synthesized through chemical reactions. Organic fertilizers are of animal, plant or human origin, and sometimes two (animal and plant) or all three. Organic fertilizer of animal origin often comes from industrial waste. Examples include ground horn, compost tea, guano, feathers, urea, hoof and bone meal, dried blood, fresh and composted manure and fish meal. Organic fertilizer of plant origin is composted plant waste (by worms or by micro-organisms), algae, compost tea, plant extracts, pelletized plant biomass, green manure (solid or semi-solid) or other decoctions. Organic fertilizer of human origin includes for example sewage sludge, industrial waste such as paper crumble, and urban compost. Biofertilizers are microorganism-containing substances that, when added to soil, increase fertility and promote plant growth. The microorganisms have the capacity to enhance plant nutrient uptake by multiplying in the rhizosphere, the region of soil surrounding plant roots, and making the nutrients more easily available to plant root. Biofertilizers generally comprise bacterial biofertilizers, fungal biofertilizers, algal biofertilizers, actinomycetes biofertilizers.

Since the action of biofertilizers depends on the viability of the microorganisms they contain, it is important to ensure the stability and the capacity of these microorganisms to form bioavailable nutrients to the germinating seed and after that for the development and growth of the plant. The stability of these microorganisms is strongly dependent on the type of biofertilizers, i.e. a liquid biofertilizer or a solid biofertilizer with respectively a liquid formulation or a solid formulation.

Generally speaking, bio-fertilizers are, without being limited thereto, desired to be as ecological as possible not only with respect to their formulation, but also in their manufacturing and transportation. The demand for bio-fertilizers with the least ingredients is growing, and therefore improved shelf-life becomes more and more important.

First of all, there is clearly a desire to reduce spoiling and waste from the user, farmers community, and accordingly, the farmer wants to make sure that they can use the bio-fertilizer over an extended period of time, i.e. for several applications in one crop or even over several cropping seasons (or multiple plantings over several years).

Further, in bio-fertilizers, the microorganisms are the active ingredients. Microorganisms are responsible for rendering the nutrients available for the seed and after that for the development and growing of the plant. They fix the atmospheric nitrogen, solubilize the phosphorus to make it usable by the plant by their metabolic action, and thus must be living micro-organisms. It is therefore highly important for the microorganisms to remain alive or to be able to revive and show the expected metabolic action after extended storage.

Within the meaning of the present invention, the term "Shelf-life of X months" is not only directed to formulations which are not degraded over a period of X months, but also directed to formulations in which the micro-organisms are kept alive or able to be revived after the storage during X months, i.e. able to show their metabolic action and to form colonies in an agar culture medium.

In the context of green, ecological or organic agriculture, farmers prioritize natural processes and avoid synthetic additives (coatings of seeds or fertilizers), they also avoid using synthetic pesticides, fungicides in the coating of the seeds or fertilizers that contribute to soil and water pollution and negatively impact local ecosystems and biodiversity. Indeed, farmers from the green and ecological communities are particularly conscious of their environmental footprint and strive to protect the soil health and surrounding ecosystems. Furthermore, it appears that the introduction of chemically coated seeds or seeds coated with synthetic additives coming from pesticides or chemical fertilizers can adversely affect beneficial soil microorganisms leading to a deterioration in the health of the soil and plants, while farmers strive to create healthy and sustainable soils through practices such as crop rotation, composting.

It appears that using chemistry / synthetic additives provide a quick boost of nutrients to the soil, to the seed and to the plant, but do not contribute to the sustainable health of the soil, the exact opposite of what organic and green farmers are looking for.

There is therefore a real need to provide to industrials and more particularly green and organic farmers who want to practice more ecological and sustainable agriculture, an improved seed to solve the above-mentioned challenges.

In particular, there is a real need to provide an improved coated seed in terms of protection against environmental stresses, with high physiological qualities in order to improve the germination of the seed, seedling survival and growth in the face of diseases, insects, low soil pH and poor soil fertility.

In addition to the needs already mentioned, it is an object of the invention to provide a coated seed with an improved stability of the microorganisms, with an environmental footprint as low as possible in order to provide a solution to green, organic and ecological farmers communities.

To this end, the present invention provides a coated seed comprising at least a seed and at least a coating, said seed is chosen in the group comprising seed of cotton, seed of maize/corn, seed of soybean, seed of rice, seed of sunflower, seed of tomato, seed of wheat, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

The soil activator composition to be used in the coating of said coated seed according to the present invention has an extended shelf life characterized by at least 263 million (2.63×10⁸), preferably at least 500 million (5×10⁸) cfu total bacteria /g soil activator composition after at least 2 years and preferably after 3 years.

Said seed according to the present invention is chosen in the group comprising seed of cotton, seed of maize/corn, seed of soybean, seed of rice, seed of sunflower, seed of tomato, seed of wheat.

In an embodiment of the present invention, said seed is chosen in the group comprising seed of cotton, seed of maize/corn, seed of soybean, seed of rice, seed of sunflower, seed of tomato.

In an embodiment of the present invention, said seed is chosen in the group comprising seed of cotton, seed of maize/corn, seed of soybean, seed of rice, seed of sunflower, seed of wheat.

In an embodiment of the present invention, said seed is chosen in the group comprising seed of cotton, seed of maize/corn, seed of soybean, seed of rice, seed of tomato, seed of wheat.

In an embodiment of the present invention, said seed is chosen in the group comprising seed of cotton, seed of maize/corn, seed of soybean, seed of sunflower, seed of tomato, seed of wheat.

In an embodiment of the present invention, said seed is chosen in the group comprising seed of cotton, seed of maize/corn, seed of rice, seed of sunflower, seed of tomato, seed of wheat.

In an embodiment of the present invention, said seed is chosen in the group comprising seed of cotton, seed of soybean, seed of rice, seed of sunflower, seed of tomato, seed of wheat.

In an embodiment of the present invention, said seed is chosen in the group comprising seed of maize/corn, seed of soybean, seed of rice, seed of sunflower, seed of tomato, seed of wheat.

In an embodiment of the present invention, said seed is chosen in the group comprising seed of cotton, seed of maize/corn, seed of soybean, seed of rice, seed of sunflower.

In an embodiment of the present invention, said seed is chosen in the group comprising seed of cotton, seed of maize/corn, seed of soybean, seed of rice, seed of tomato.

In an embodiment of the present invention, said seed is chosen in the group comprising seed of cotton, seed of maize/corn, seed of soybean, seed of rice, seed of wheat.

In an embodiment of the present invention, said seed is chosen in the group comprising seed of cotton, seed of maize/corn, seed of soybean, seed of sunflower, seed of tomato.

In an embodiment of the present invention, said seed is chosen in the group comprising seed of cotton, seed of maize/corn, seed of soybean, seed of sunflower, seed of wheat.

In an embodiment of the present invention, said seed is chosen in the group comprising seed of cotton, seed of maize/corn, seed of soybean, seed of tomato, seed of wheat.

In an embodiment of the present invention, said seed is chosen in the group comprising seed of cotton, seed of maize/corn, seed of rice, seed of sunflower, seed of tomato.

In an embodiment of the present invention, said seed is chosen in the group comprising seed of cotton, seed of maize/corn, seed of rice, seed of sunflower, seed of wheat.

In an embodiment of the present invention, said seed is chosen in the group comprising seed of cotton, seed of maize/corn, seed of rice, seed of tomato, seed of wheat.

In an embodiment of the present invention, said seed is chosen in the group comprising seed of cotton, seed of maize/corn, seed of sunflower, seed of tomato, seed of wheat.

In an embodiment of the present invention, said seed is chosen in the group comprising seed of cotton, seed of soybean, seed of rice, seed of sunflower, seed of tomato.

In an embodiment of the present invention, said seed is chosen in the group comprising seed of cotton, seed of soybean, seed of rice, seed of sunflower, seed of wheat.

In an embodiment of the present invention, said seed is chosen in the group comprising seed of cotton, seed of soybean, seed of rice, seed of tomato, seed of wheat.

In an embodiment of the present invention, said seed is chosen in the group comprising seed of cotton, seed of soybean, seed of sunflower, seed of tomato, seed of wheat.

In an embodiment of the present invention, said seed is chosen in the group comprising seed of cotton, seed of rice, seed of sunflower, seed of tomato, seed of wheat.

In an embodiment of the present invention, said seed is chosen in the group comprising seed of maize/corn, seed of soybean, seed of rice, seed of sunflower, seed of tomato.

In an embodiment of the present invention, said seed is chosen in the group comprising seed of maize/corn, seed of soybean, seed of rice, seed of sunflower, seed of wheat.

In an embodiment of the present invention, said seed is chosen in the group comprising seed of maize/corn, seed of soybean, seed of rice, seed of tomato, seed of wheat.

In an embodiment of the present invention, said seed is chosen in the group comprising seed of maize/corn, seed of soybean, seed of sunflower, seed of tomato, seed of wheat.

In an embodiment of the present invention, said seed is chosen in the group comprising seed of maize/corn, seed of rice, seed of sunflower, seed of tomato, seed of wheat.

In an embodiment of the present invention, said seed is chosen in the group comprising seed of soybean, seed of rice, seed of sunflower, seed of tomato, seed of wheat.

In an embodiment of the present invention, said seed is chosen in the group comprising seed of cotton, seed of maize/corn, seed of soybean, seed of rice.

In an embodiment of the present invention, said seed is chosen in the group comprising seed of cotton, seed of maize/corn, seed of soybean, seed of sunflower.

In an embodiment of the present invention, said seed is chosen in the group comprising seed of cotton, seed of maize/corn, seed of soybean, seed of tomato.

In an embodiment of the present invention, said seed is chosen in the group comprising seed of cotton, seed of maize/corn, seed of soybean, seed of wheat.

In an embodiment of the present invention, said seed is chosen in the group comprising seed of cotton, seed of maize/corn, seed of rice, seed of sunflower.

In an embodiment of the present invention, said seed is chosen in the group comprising seed of cotton, seed of maize/corn, seed of rice, seed of tomato.

In an embodiment of the present invention, said seed is chosen in the group comprising seed of cotton, seed of maize/corn, seed of rice, seed of wheat.

In an embodiment of the present invention, said seed is chosen in the group comprising seed of cotton, seed of maize/corn, seed of sunflower, seed of tomato.

In an embodiment of the present invention, said seed is chosen in the group comprising seed of cotton, seed of maize/corn, seed of sunflower, seed of wheat.

In an embodiment of the present invention, said seed is chosen in the group comprising seed of cotton, seed of soybean, seed of rice, seed of sunflower.

In an embodiment of the present invention, said seed is chosen in the group comprising seed of cotton, seed of soybean, seed of rice, seed of tomato.

In an embodiment of the present invention, said seed is chosen in the group comprising seed of cotton, seed of soybean, seed of rice, seed of wheat.

In an embodiment of the present invention, said seed is chosen in the group comprising seed of cotton, seed of soybean, seed of sunflower, seed of tomato.

In an embodiment of the present invention, said seed is chosen in the group comprising seed of cotton, seed of soybean, seed of sunflower, seed of wheat.

In an embodiment of the present invention, said seed is chosen in the group comprising seed of cotton, seed of rice, seed of sunflower, seed of tomato.

In an embodiment of the present invention, said seed is chosen in the group comprising seed of cotton, seed of rice, seed of sunflower, seed of wheat.

In an embodiment of the present invention, said seed is chosen in the group comprising seed of maize/corn, seed of soybean, seed of rice, seed of sunflower.

In an embodiment of the present invention, said seed is chosen in the group comprising seed of maize/corn, seed of soybean, seed of rice, seed of tomato.

In an embodiment of the present invention, said seed is chosen in the group comprising seed of maize/corn, seed of soybean, seed of rice, seed of wheat.

In an embodiment of the present invention, said seed is chosen in the group comprising seed of maize/corn, seed of soybean, seed of sunflower, seed of tomato.

In an embodiment of the present invention, said seed is chosen in the group comprising seed of maize/corn, seed of soybean, seed of sunflower, seed of wheat.

In an embodiment of the present invention, said seed is chosen in the group comprising seed of maize/corn, seed of rice, seed of sunflower, seed of tomato.

In an embodiment of the present invention, said seed is chosen in the group comprising seed of maize/corn, seed of rice, seed of sunflower, seed of wheat.

In an embodiment of the present invention, said seed is chosen in the group comprising seed of soybean, seed of rice, seed of sunflower, seed of tomato.

In an embodiment of the present invention, said seed is chosen in the group comprising seed of soybean, seed of rice, seed of sunflower, seed of wheat.

In an embodiment of the present invention, said seed is chosen in the group comprising seed of cotton, seed of maize/corn, seed of soybean.

In an embodiment of the present invention, said seed is chosen in the group comprising seed of cotton, seed of maize/corn, seed of rice.

In an embodiment of the present invention, said seed is chosen in the group comprising seed of cotton, seed of maize/corn, seed of sunflower.

In an embodiment of the present invention, said seed is chosen in the group comprising seed of cotton, seed of maize/corn, seed of tomato.

In an embodiment of the present invention, said seed is chosen in the group comprising seed of cotton, seed of maize/corn, seed of wheat.

In an embodiment of the present invention, said seed is chosen in the group comprising seed of cotton, seed of soybean, seed of rice.

In an embodiment of the present invention, said seed is chosen in the group comprising seed of cotton, seed of soybean, seed of sunflower.

In an embodiment of the present invention, said seed is chosen in the group comprising seed of cotton, seed of soybean, seed of tomato.

In an embodiment of the present invention, said seed is chosen in the group comprising seed of cotton, seed of soybean, seed of wheat.

In an embodiment of the present invention, said seed is chosen in the group comprising seed of cotton, seed of rice, seed of sunflower.

In an embodiment of the present invention, said seed is chosen in the group comprising seed of cotton, seed of rice, seed of tomato.

In an embodiment of the present invention, said seed is chosen in the group comprising seed of cotton, seed of rice, seed of wheat.

In an embodiment of the present invention, said seed is chosen in the group comprising seed of cotton, seed of sunflower, seed of tomato.

In an embodiment of the present invention, said seed is chosen in the group comprising seed of cotton, seed of sunflower, seed of wheat.

In an embodiment of the present invention, said seed is chosen in the group comprising seed of cotton, seed of tomato, seed of wheat.

In an embodiment of the present invention, said seed is chosen in the group comprising seed of maize/corn, seed of soybean, seed of rice.

In an embodiment of the present invention, said seed is chosen in the group comprising seed of maize/corn, seed of soybean, seed of sunflower.

In an embodiment of the present invention, said seed is chosen in the group comprising seed of maize/corn, seed of soybean, seed of tomato.

In an embodiment of the present invention, said seed is chosen in the group comprising seed of maize/corn, seed of soybean, seed of wheat.

In an embodiment of the present invention, said seed is chosen in the group comprising seed of maize/corn, seed of rice, seed of sunflower.

In an embodiment of the present invention, said seed is chosen in the group comprising seed of maize/corn, seed of rice, seed of tomato.

In an embodiment of the present invention, said seed is chosen in the group comprising seed of maize/corn, seed of rice, seed of wheat.

In an embodiment of the present invention, said seed is chosen in the group comprising seed of maize/corn, seed of sunflower, seed of tomato.

In an embodiment of the present invention, said seed is chosen in the group comprising seed of maize/corn, seed of sunflower, seed of wheat.

In an embodiment of the present invention, said seed is chosen in the group comprising seed of maize/corn, seed of tomato, seed of wheat.

In an embodiment of the present invention, said seed is chosen in the group comprising seed of soybean, seed of rice, seed of sunflower.

In an embodiment of the present invention, said seed is chosen in the group comprising seed of soybean, seed of rice, seed of tomato.

In an embodiment of the present invention, said seed is chosen in the group comprising seed of soybean, seed of rice, seed of wheat.

In an embodiment of the present invention, said seed is chosen in the group comprising seed of soybean, seed of sunflower, seed of tomato.

In an embodiment of the present invention, said seed is chosen in the group comprising seed of soybean, seed of sunflower, seed of wheat.

In an embodiment of the present invention, said seed is chosen in the group comprising seed of soybean, seed of tomato, seed of wheat.

In an embodiment of the present invention, said seed is chosen in the group comprising seed of rice, seed of sunflower, seed of tomato.

In an embodiment of the present invention, said seed is chosen in the group comprising seed of rice, seed of sunflower, seed of wheat.

In an embodiment of the present invention, said seed is chosen in the group comprising seed of rice, seed of tomato, seed of wheat.

In an embodiment of the present invention, said seed is chosen in the group comprising seed of sunflower, seed of tomato, seed of wheat.

In an embodiment of the present invention, said seed is chosen in the group comprising seed of cotton, seed of maize/corn.

In an embodiment of the present invention, said seed is chosen in the group comprising seed of cotton, seed of soybean.

In an embodiment of the present invention, said seed is chosen in the group comprising seed of cotton, seed of rice.

In an embodiment of the present invention, said seed is chosen in the group comprising seed of cotton, seed of sunflower.

In an embodiment of the present invention, said seed is chosen in the group comprising seed of cotton, seed of tomato.

In an embodiment of the present invention, said seed is chosen in the group comprising seed of cotton, seed of wheat.

In an embodiment of the present invention, said seed is chosen in the group comprising seed of maize/corn, seed of soybean.

In an embodiment of the present invention, said seed is chosen in the group comprising seed of maize/corn, seed of rice.

In an embodiment of the present invention, said seed is chosen in the group comprising seed of maize/corn, seed of sunflower.

In an embodiment of the present invention, said seed is chosen in the group comprising seed of maize/corn, seed of tomato.

In an embodiment of the present invention, said seed is chosen in the group comprising seed of maize/corn, seed of wheat.

In an embodiment of the present invention, said seed is chosen in the group comprising seed of soybean, seed of rice.

In an embodiment of the present invention, said seed is chosen in the group comprising seed of soybean, seed of sunflower.

In an embodiment of the present invention, said seed is chosen in the group comprising seed of soybean, seed of tomato.

In an embodiment of the present invention, said seed is chosen in the group comprising seed of soybean, seed of wheat.

In an embodiment of the present invention, said seed is chosen in the group comprising seed of rice, seed of sunflower.

In an embodiment of the present invention, said seed is chosen in the group comprising seed of rice, seed of tomato.

In an embodiment of the present invention, said seed is chosen in the group comprising seed of rice, seed of wheat.

In an embodiment of the present invention, said seed is chosen in the group comprising seed of sunflower, seed of tomato.

In an embodiment of the present invention, said seed is chosen in the group comprising seed of sunflower, seed of wheat.

In an embodiment of the present invention, said seed is chosen in the group comprising seed of tomato, seed of wheat.

Moreover, the present invention concerns a coated seed comprising at least a seed of cotton and at least a coating, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

Moreover, the present invention concerns a coated seed comprising at least a seed of maize/corn and at least a coating, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

Moreover, the present invention concerns a coated seed comprising at least a seed of soybean and at least a coating, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

Moreover, the present invention concerns a coated seed comprising at least a seed of rice and at least a coating, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

Moreover, the present invention concerns a coated seed comprising at least a seed of sunflower and at least a coating, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

Moreover, the present invention concerns a coated seed comprising at least a seed of tomato and at least a coating, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

Moreover, the present invention concerns a coated seed comprising at least a seed of wheat and at least a coating, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

According to the present invention, the inventors were able to provide, in a surprising way, a seed chosen in the group comprising seed of cotton, seed of maize/corn, seed of soybean, seed of rice, seed of sunflower, seed of tomato, seed of wheat, which is coated on its surface by at least a binding agent and a soil activator composition with at least a bacterial mixture containing at least a rhizobacteria species and at least a bacteria species with some antifungal activity showing an extended shelf life of at least 2 years and even up to 3 years after which said bacterial mixture still contains at least 263 million (2.63×10⁸) cfu/g of soil activator composition, preferably at least 500 million (5×10⁸) cfu total bacteria /g soil activator composition after at least 2 years and preferably after 3 years, and having an environmental footprint as low as possible by providing a very small number of ingredients.

In a particularly advantageous way, it has thus been possible to coat a seed chosen in the group comprising seed of cotton, seed of maize/corn, seed of soybean, seed of rice, seed of sunflower, seed of tomato, seed of wheat, to obtain a coated seed with a soil activator composition in which the mixture of bacteria unexpectedly and surprisingly has an extended shelf life of at least 2 years and even up to 3 years.

Thus, and advantageously, the production of a coated seed according to the present invention is made more ecologically and is more sustainable in use and manufacturing.

Indeed, considering in one hand the world global challenge regarding crops of cotton, maize/corn, soybean, rice, sunflower, tomato and wheat, and in the other hand in the context of green, ecological and organic agriculture, the coated seed according to the present invention allows farmers and industrials to have a green and ecological alternative to the utilisation of synthetic compounds and additives in conventional coatings of seeds.

In addition, the present invention provides green farmers and industrials with a solution, namely a coated seed of cotton, maize/corn, soybean, rice, sunflower, tomato, or wheat, which seeks to first protect the seed against environmental stresses and promote seed/plant development and growth, second contribute to the long-term health of the soil and surrounding ecosystems improving soil fertility and reducing nutrient loss through leaching thanks to the bacterial mixture containing at least a rhizobacteria species and at least a bacteria species with some antifungal activity, third allowing to farmers to build a green and sustainable agriculture with an environment footprint as low as possible, and fourth to support the world's challenges and needs in these crops.

To go further, thanks to the soil activator composition according to the invention, it is possible to limit and considerably reduce the manufacturing costs for coated seed. In fact, as explained above, the soil activator composition contains a bacterial mixture with an extended shelf life of up to 2 and preferably 3 years, which means that such coated seed manufacturers can purchase and transport larger quantities of solid soil activator composition and store this powder for a longer period of time, limiting the purchase, transport and storage of water, which must be avoided at all costs in order to justify the ecological aspect, and finally being able to manufacture coated seed according to the present invention, directly on site, while retaining flexibility with regard to the quantity of material used and the moment of manufacture, since it is possible to conserve and store said soil activator composition while retaining the benefit of the bacterial mixture.

Furthermore, the addition of a coating comprising said soil activator composition to form a coated seed according to the present invention increase the value of the product, the initial seed, efficiency and availability of nutrients for the plant with beneficial soil microorganisms in order to improve the health and fertility of the soil and plant development.

In particular, said at least one rhizobacteria species of said soil activator composition of the coated seed according to the present invention is a plant growth-promoting rhizobacteria, preferably chosen in the group comprising Bacillus subtilis, Bacillus megaterium, Bacillus megaterium var. phosphaticum, Bacillus oleronius, Bacillus velezensis, Bacillus tequilensis, Bacillus cereus, Acinetobacter genus, Arthrobacter genus, Azoarcus species, Azospirillum species, Azospirillum brasilense, Azotobacter genus, Beijerinckia fluminensis, Bradyrhizobium species, Rhizobium species, Agrobacterium fabrum, Burkholderia vietnamiensis, Burkholderia cepacian, Enterobacter genus, Serratia species, Frankia, Acetobacter genus, Gluconacetobacter species, Gluconobacter species, Klebsiella, Pseudomonas genus, Streptomyces genus, Alcaligenes faecalis, Jeotgalicoccus genus, Paenibacillus alvei, Stenotrophomonas maltophilia, Achromobactergenus, Achromobacterxylosoxidans, Lactic acid bacteria, Chaetomium globosum, Exiguobacterium oxidotolerans, Herbaspirillum species, and their combination, more preferably said plant growth-promoting rhizobacteria is Bacillus subtilis.

Indeed, said at least one rhizobacteria species of said soil activator composition of the coated seed according to the present invention is Bacillus subtilis as plant growth-promoting rhizobacteria.

Advantageously, said at least one bacteria species with some antifungal activity of the coated seed according to the present invention is chosen in the group comprising Pseudomonas monteilii, Pseudomonas fluorescens, Pseudomonas putida, Bacillus amyloliquefaciens, Bacillus pumilis, Bacilus liqueniformis, and their combination, preferably said bacterial mixture contains at least two bacteria species with some antifungal activity, more preferably said bacterial mixture contains at least three bacteria species with some antifungal activity.

For example, said at least a bacteria with some antifungal activity of said soil activator composition of said coated seed according to the present invention is Pseudomonas monteilii.

For example, said at least a bacteria with some antifungal activity of said soil activator composition of said coated seed according to the present invention is Pseudomonas fluorescens.

For example, said at least a bacteria with some antifungal activity of said soil activator composition of said coated seed according to the present invention is Pseudomonas putida.

For example, said at least a bacteria with some antifungal activity of said soil activator composition of said coated seed according to the present invention is Bacillus amyloliquefaciens.

For example, said at least a bacteria with some antifungal activity of said soil activator composition of said coated seed according to the present invention is Bacillus pumilis.

For example, said at least a bacteria with some antifungal activity of said soil activator composition of said coated seed according to the present invention is Bacillus liqueniformis.

In a preferred embodiment of the present invention, said bacterial mixture contains at least two bacteria with some antifungal activity, preferably chosen in the group comprising Pseudomonas monteilii, Pseudomonas fluorescens, Pseudomonas putida, Bacillus amyloliquefaciens, Bacillus pumilis, Bacillus liqueniformis, and their combination.

More preferably said bacterial mixture contains at least three, or four, or five bacteria with some antifungal activity.

For example, said bacterial mixture contains at least a bacteria with some antifungal activity being Pseudomonas monteilii, at least a bacteria with some antifungal activity being Bacillus amyloliquefaciens, and at least a third bacteria with some antifungal activity chosen in the group comprising Pseudomonas fluorescens, Pseudomonas putida, Bacillus pumilis, Bacillus liqueniformis, and their combination.

In one advantageous embodiment, said bacterial mixture of said soil activator composition of said coated seed according to the present invention contains at least 240 million (2.4×10⁸) cfu of Bacillus subtilis/g soil activator composition after said extended shelf life, measured according to ASTM-D5465-93 (dated 1998) standard, preferably at least 500 million (5.0×10⁸) cfu of Bacillus subtilis/g soil activator composition, more preferably at least 800 million (8.0×10⁸) cfu of Bacillus subtilis/g soil activator composition, even more preferably at least 1 billion (1.0×10⁹) cfu of Bacillus subtilis/g soil activator composition, in particular at least 1.4 billion (1.4×10⁹) cfu of Bacillus subtilis/g soil activator composition, more particular at least 1.8 billion (1.8×10⁹) cfu of Bacillus subtilis/g soil activator composition, even more particular at least 2.0 billion (2.0×10⁹) cfu of Bacillus subtilis/g soil activator composition, advantageously at least 2.4 billion (2.4×10⁹) cfu of Bacillus subtilis/g soil activator composition, more preferably at least 3.0 billion (3.0×10⁹) cfu of Bacillus subtilis/g soil activator composition, more preferably at least 4.0 billion (4.0×10⁹) cfu of Bacillus subtilis/g soil activator composition, even more preferably at least 5 billion (5.0×10⁹) cfu of Bacillus subtilis/g soil activator composition, in particular at least 6 billion (6.0×10⁹) cfu of Bacillus subtilis/g soil activator composition, more particular at least 7 billion (7.0×10⁹) cfu of Bacillus subtilis/g soil activator composition, even more particular at least 8 billion (8.0×10⁹) cfu of Bacillus subtilis/g soil activator composition, advantageously at least 9 billion (9.0×10⁹) cfu of Bacillus subtilis/g soil activator composition, advantageously at least 10 billion (1.0×10¹⁰) cfu of Bacillus subtilis/g soil activator composition, more preferably at least 12 billion (1.2x10'°) cfu of Bacillus subtilis/g soil activator composition, more preferably at least 14 billion (1.4×10¹⁰) cfu of Bacillus subtilis/g soil activator composition, even more preferably at least 16 billion (1.6×10¹⁰) cfu of Bacillus subtilis/g soil activator composition, in particular at least 18 billion (1.8×10¹⁰) cfu of Bacillus subtilis/g soil activator composition, more particular at least 19 billion (1.9×10¹⁰) cfu of Bacillus subtilis/g soil activator composition, even more particular at least 20 billion (2.0×10¹⁰), preferably at least 25 billion (2.5×10¹⁰) cfu of Bacillus subtilis/g soil activator composition.

In a preferred embodiment, said bacterial mixture of said soil activator composition of said coated seed according to the present invention contains at least 5 million (5.0×10⁶) cfu of Bacillus amyloliquefaciens/g soil activator composition after said extended shelf life measured according to ASTM-D5465-93 (dated 1998) standard, preferably at least 10 million (1.0×10⁷) cfu of Bacillus amyloliquefaciens/g soil activator composition, more preferably at least 30 million (3.0×10⁷) cfu of Bacillus amyloliquefaciens/g soil activator composition, even more preferably at least 50 million (5.0×10⁷) cfu of Bacillus amyloliquefaciens/g soil activator composition, advantageously at least 70 million (7.0×10⁷) cfu of Bacillus amyloliquefaciens/g soil activator composition, more advantageously at least 90 million (9.0×10⁷) cfu of Bacillus amyloliquefaciens/g soil activator composition, even more advantageously at least 100 million (1.0×10⁸) cfu of Bacillus amyloliquefaciens/g soil activator composition, in particular at least 150 million (1.5×10⁸) cfu of Bacillus amyloliquefaciens/g soil activator composition, more particular at least 200 million (2.0×10⁸) cfu of Bacillus amyloliquefaciens/g soil activator composition, even more particular at least 250 million (2.5×10⁸) cfu of Bacillus amyloliquefaciens/g soil activator composition, preferably at least 300 million (3.0×10⁸) cfu of Bacillus amyloliquefaciens/g soil activator composition, more preferably at least 350 million (3.5×10⁸) cfu of Bacillus amyloliquefaciens/g soil activator composition, even more preferably at least 400 million (4.0×10⁸) cfu of Bacillus amyloliquefaciens/g soil activator composition, in particular at least 450 million (4.5×10⁸) cfu of Bacillus amyloliquefaciens/g soil activator composition, even more advantageously at least 500 million (5.0×10⁸) cfu of Bacillus amyloliquefaciens/g soil activator composition, preferably at least 800 million (8.0×10⁸) cfu of Bacillus amyloliquefaciens/g soil activator composition, preferably 900 million (9×10⁸) cfu of Bacillus amyloliquefaciens/g soil activator composition, preferably 1 billion (1×10⁹) cfu of Bacillus amyloliquefaciens/g soil activator composition, preferably 3 billion (3×10⁹) cfu of Bacillus amyloliquefaciens/g soil activator composition.

Advantageously, said bacterial mixture of said soil activator composition of said coated seed according to the present invention contains at least 10 million (1.0×10⁷) cfu of Pseudomonas monteilii/g soil activator composition after said extended shelf life, measured according to ASTM-D5465-93 (dated 1998) standard, preferably at least 15 million (1.5×10⁷) cfu of Pseudomonas monteilii/g soil activator composition, more preferably at least 20 million (2.0×10⁷) cfu of Pseudomonas monteilii/g soil activator composition, even more preferably at least 25 million (2.5×10⁷) cfu of Pseudomonas monteilii/g soil activator composition, in particular at least 30 million (3.0×10⁷) cfu of Pseudomonas monteilii/g soil activator composition, more particular at least 35 million (3.5×10⁷) cfu of Pseudomonas monteilii/g soil activator composition, even more particular at least 40 million (4.0×10⁷) cfu of Pseudomonas monteilii/g soil activator composition, advantageously at least 45 million (4.5×10⁷) cfu of Pseudomonas monteilii/g soil activator composition, more advantageously at least 50 million (5.0×10⁷) cfu of Pseudomonas monteilii/g soil activator composition, even more advantageously at least 55 million (5.5×10⁷) cfu of Pseudomonas monteilii/g soil activator composition, preferably at least 60 million (6.0×10⁷) cfu of Pseudomonas monteilii/g soil activator composition, more preferably at least 65 million (6.5×10⁷) cfu of Pseudomonas monteilii/g soil activator composition, even more preferably at least 70 million (7.0×10⁷) cfu of Pseudomonas monteilii/g soil activator composition, in particular at least 80 million (8.0×10⁷) cfu of Pseudomonas monteilii/g soil activator composition, more particular at least 90 million (9.0×10⁷) cfu of Pseudomonas monteilii/g soil activator composition, even more particular at least 100 million (1.0×10⁸) cfu of Pseudomonas monteilii/g soil activator composition, advantageously at least 200 million (2.0×10⁸) cfu of Pseudomonas monteilii/g soil activator composition, in particular at least 500 million (5.0×10⁸) cfu of Pseudomonas monteilii/g soil activator composition, advantageously at least 800 million (8.0×10⁸) cfu of Pseudomonas monteilii/g soil activator composition, preferably at least 1 billion (1.0×10⁹) cfu of Pseudomonas monteilii/g soil activator composition, advantageously at least 1.5 billion (1.5×10⁹) cfu of Pseudomonas monteilii/g soil activator composition, more advantageously at least 2.0 billion (2.0×10⁹) cfu of Pseudomonas monteilii/g soil activator composition.

Even more preferably, said bacterial mixture of said soil activator composition of said coated seed according to the present invention contains at least 500 million (5.0×10⁸) cfu total bacteria /g soil activator composition after said extended shelf life measured according to ASTM-D5465-93 (dated 1998) standard, preferably at least 700 million (7.0×10⁸) cfu total bacteria /g soil activator composition, more preferably at least 900 million (9.0×10⁸) cfu total bacteria /g soil activator composition, even more preferably at least 1 billion (1.0×10⁹) cfu total bacteria /g soil activator composition, advantageously at least 2 billion (2.0×10⁹) cfu total bacteria /g soil activator composition, more advantageously at least 3 billion (3.0×10⁹) cfu total bacteria /g soil activator composition, even more advantageously at least 4 billion (4.0×10⁹) cfu total bacteria /g soil activator composition, in particular at least 5 billion (5.0×10⁹) cfu total bacteria /g soil activator composition, more particular at least 6 billion (6.0×10⁹) cfu total bacteria /g soil activator composition, even more particular at least 7 billion (7.0×10⁹) cfu total bacteria /g soil activator composition, particularly at least 8 billion (8.0×10⁹) cfu total bacteria /g soil activator composition, more particularly at least 9 billion (9.0×10⁹) cfu total bacteria /g soil activator composition, even more particularly at least 10 billion (1.0×10¹⁰) cfu total bacteria /g soil activator composition, preferably at least 11 billion (1.1×10¹⁰) cfu total bacteria /g oil activator composition, advantageously at least 12 billion (1.2×10¹⁰) cfu total bacteria /g soil activator composition, more advantageously at least 13 billion (1.3×10¹⁰) cfu total bacteria /g soil activator composition, even more advantageously at least 14 billion (1.4×10¹⁰) cfu total bacteria /g soil activator composition, in particular at least 15 billion (1.5×10¹⁰) cfu total bacteria /g soil activator composition, more particular at least 16 billion (1.6×10¹⁰) cfu total bacteria /g soil activator composition, even more particular at least 17 billion (1.7×10¹⁰) cfu total bacteria /g soil activator composition, particularly at least 18 billion (1.8×10¹⁰) cfu total bacteria /g soil activator composition, more particularly at least 19 billion (1.9×10¹⁰) cfu total bacteria /g soil activator composition, even more particularly at least 20 billion (2.0×10¹⁰) cfu total bacteria /g soil activator composition, advantageously at least 25 billion (2.5×10¹⁰) cfu total bacteria /g soil activator composition, in particular at least 50 billion (5.0×10¹⁰) cfu total bacteria /g soil activator composition.

In a advantageously embodiment of the present invention, the ratio of cfu of the at least one bacteria species with some antifungal activity/g soil activator composition to total cfu bacteria /g soil activator is at least 0.01, preferably at least 0.02, more preferably at least 0.06, preferably at least 0.1, preferably at least 0.25, preferably at least 0.6 measured according to ASTM-D5465-93 (dated 1998) standard, and/or presenting a relation of cfu of Pseudomonas monteilii to Bacillus subtilis defined as (cfu of Pseudomonas monteilii/cfu of Bacillus subtilis) multiplied by 100 of at least 0.01, preferably at least 0.02, preferably at least 0.04, preferably at least 0.10, preferably at least 0.20, preferably at least 0.30, preferably at least 0.5, preferably at least 0.6, preferably at least 0.70, preferably at least 0.8, preferably at least 1.0, preferably at least 1.5, preferably at least 2.0, preferably at least 2.5, preferably at least 3.0, preferably at least 3.5, preferably at least 4.0, preferably at least 4.5, preferably at least 5.0, preferably at least 5.5, preferably at least 6.0, preferably at least 6.5, preferably at least 7.0, preferably at least 7.5, preferably at least 8.0.

It has been shown that for example the ratio of cfu of Pseudomonas monteilii as phosphorus solubilizing bacteria and nitrogen fixing bacteria/g soil activator composition to total cfu bacteria/g soil activator composition is very important to the development of the seed and growth of the plant to provide enough bioavailable phosphorus and nitrogen to the plant and in good balance with the other nutrients made available by the remaining bacteria.

Preferably, the ratio of Pseudomonas monteilii to the other bacteria is at least 0.01, preferably at least 0.02, preferably at least 0.04, preferably 0.25, preferably 0.33, preferably 0.5, preferably 0.6, preferably 0.79.

The selection of Bacillus subtilis as rhizobacteria species and Pseudomonas monteilii, and preferably Bacillus amyloliquefaciens, as bacteria species with some antifungal activity, allow to, when the bacteria are spread on the soil with the coated seed according to the present invention, and therefore end up in the soil, they fix nitrogen and solubilize phosphate.

Indeed, the inventors surprisingly found that the specific selection and combination of Bacillus subtilis as rhizobacteria species, Pseudomonas monteilii and/or Bacillus amyloliquefaciens as some antifungal bacteria, had a high capacity for solubilizing phosphate while Bacillus subtilis was not able to solubilize phosphate alone, and had a high capacity for fixing nitrogen while Bacillus amyloliquefaciens did not exhibit any nitrogen fixation capabilities.

Thus, the selection of bacteria made by the inventors makes it possible to combine both the benefits of the high capacity for solubilizing phosphate and high capacity for fixing nitrogen, increasing fertility, promoting plant-growth and making the nutrients more easily available to the seed and plant root of said seed chosen in the group comprising seed of cotton, seed of maize/corn, seed of soybean, seed of rice, seed of sunflower, seed of tomato, seed of wheat to support the world's challenges and needs in these crops.

In a preferred embodiment of the present invention, said soil activator composition of said coated seed according to the present invention comprises said bacterial mixture in an amount from 0.2 wt% to 20 wt% with respect to the total weight of said soil activator composition, more preferably from 0.2 wt% to 15 wt%, in particular from 0.2 wt% to 12 wt%, particularly from 0.2 wt% to 10 wt%, advantageously from 0.2 wt% to 8 wt%.

More advantageously said soil activator composition comprises said bacterial mixture in an amount from 0.2 wt% to 6 wt%, even more advantageously from 0.2 wt% to 5 wt%.

For example, said soil activator coating comprises 0.2%, preferably 0.3%, preferably 0.4%, preferably 0.5%, preferably 0.6%, preferably 0.7%, preferably 0.8%, preferably 0.9%, preferably 1%, preferably 1.1%, preferably 1.2%, preferably 1.3%, preferably 1.4%, preferably 1.5%, preferably 1.6%, preferably 1.7%, preferably 1.8%, preferably 1.9%, preferably 2%, preferably 2.1%, preferably 2.2%, preferably 2.3%, preferably 2.4%, preferably 2.5%, preferably 2.6%, preferably 2.7%, preferably 2.8%, preferably 2.9%, preferably 3%, preferably 3.1%, preferably 3.2%, preferably 3.3%, preferably 3.4%, preferably 3.5%, preferably 3.6%, preferably 3.7%, preferably 3.8%, preferably 3.9%, preferably 4%, preferably 4.1%, preferably 4.2%, preferably 4.3%, preferably 4.4%, preferably 4.5%, preferably 4.6%, preferably 4.7%, preferably 4.8%, preferably 4.9%, preferably 5%, preferably 5.2%, preferably 5.4%, preferably 5.6%, preferably 5.8%, preferably 6%, preferably 6.2%, preferably 6.4%, preferably 6.6%, preferably 6.8%, preferably 7%, preferably 7.2%, preferably 7.4%, preferably 7.6%, preferably 7.8%, preferably 8% or preferably 8.2% of said bacterial mixture with respect to the total weight of the soil activator composition in said coating of said coated seed according to the invention.

In an advantageous embodiment of the present invention, said bacterial mixture is an amount from 0.2 wt% to 8 wt% in said soil activator composition of said coating of said coated seed according to the invention.

Preferably, said at least a carrier of said soil activator composition of said coated seed according to the present invention is chosen in the group comprising sodium lignosulfonate, calcium lignosulfonate, ammonium lignosulfonate, maltodextrine, bentonite, diatomite, sepiolite, silicate, corn syrup solids, dextrose, lactose, powdered molasses, calcium phosphate and other rock powders, and their mixture.

In a particular embodiment of the present invention, said at least a carrier of said soil activator composition, is present in an amount from 50 wt% to 99.8 wt%, preferably from 55 wt% to 99.8 wt%, more preferably from 60 wt% to 99.8 wt%, advantageously from 65 wt% to 99.8 wt%, more advantageously from 70 wt% to 99.8 wt%, even more advantageously from 75 wt% to 99.8 wt%, in particular from 80 wt% to 99.8 wt%, more particularly from 85 wt% to 99.8 wt%, preferably from 90 wt% to 99.8 wt%, particularly from 92 wt% to 99.8 wt%, for example from 95 wt% to 99.8 wt%.

More particularly, said at least a carrier of said soil activator composition, is present in an amount from 92 wt% to 99.8 wt%.

More particularly, said carrier of said soil activator composition of said coated seed according to the present invention is at least one lignosulfonate salt amongst sodium lignosulfonate and calcium lignosulfonate.

The soil activator composition of the coating of said coated seed according to the present invention comprises one major component which is a sodium and/or calcium lignosulfonate, i.e. a lignosulfonate bearing as counter ion calcium or sodium.

Without fully understanding why, it turned out that the choice of the inventors to select a lignosulfonate bearing a counter ion chosen between sodium and calcium, on one side offers a favourable environment to the bacterial mixture and on second side increases stability of the bacterial mixture, allowing easy revival even after two or three years shelf life up to a level of at least 263 million (2.63×10⁸) and more preferably at least 500 million (5×10⁸) cfu/g of soil activator composition, without using mandatorily a series of additional nutrients, cell protectants, or buffering ingredients.

Indeed, contrary to document WO2015/157865 or EP3110776, which disclose formulation containing cell protectant or buffering ingredient like calcium bicarbonate and accordingly showing potentially a more detrimental environmental footprint or creating difficulties to reach a bio-fertilizer fully compatible with organic agriculture or with ecological certifications, the present invention allows to achieve a stability over time to keep the activity of the bacterial mixture of said soil activator composition without requiring additives.

As previously explained, the coated seed according to the present invention with said coating comprising the soil activator composition has therefore an environmental footprint which is very low since lignosulfonate salts of sodium or calcium are a natural recycled by-product coming from wood pulping during paper manufacturing. They are non-toxic, non-corrosive and biodegradable, with a recognized and approved use in green and organic agriculture, which is a highly desirable feature for the green farmers.

Said lignosulfonate salt is at least one amongst sodium lignosulfonate or calcium lignosulfonate. Lignosulfonate is an anionic biobased chemical with a heterogenous mixture of molecules with different degrees of polymerization and molecular weights. The sodium and calcium cations are counter-ions of the lignosulfonate. The sodium cation is monocharged while the calcium cation has two positive charges. The differences in charges modify the number of counter-ions needed to obtain a neutral composition and in the interactions between counter-ions with soil, microorganism, and plants.

Said lignosulfonate acts as a mild chelator, which can help to make micronutrients more available for the plant. Indeed, the chelation of nutrients allows them to translocate within the plants better than without chelating agent.

The bacterial mixture contains the bacteria species on a carrier and is homogeneously spread in the said at least one lignosulfonate salt. This dilution preserves the life span of the bacteria because the at least one lignosulfonate salt will act as a protective element for bacteria.

Furthermore, the extended shelf-life is measured, according to the present invention, by accelerated ageing tests that consist of blending each individual bacterial species with the at least one lignosulfonate salt, storing the blend at an elevated temperature, around 40°C more particular at 43°C, during 56 days (equivalent to approximately 2 years storage at room temperature). The bacteria count is then monitored over time by Total Plate Counts methodology according to ASTM-D5465-93 (dated 1998) standard.

In particular, the inventors use two methods to measure the extended shelf-life of the bacteria of said wettable powder soil activator composition according to the present invention :
1) The measurement of the wettable powder soil activator composition stored in standard commercial packaging at normal ambient conditions for at least 2 years, preferably for at least 3 years.
2) The measurement of wettable powder soil activator composition by accelerated ageing tests with storage for 56 days at around 40°C, more particularly at 43°C.
said measurement of bacteria is done by counting monitored over time by Total Plate Counts methodology according to ASTM-D5465-93 (dated 1998) standard.

Seeds coated as the present invention chosen in the group comprising seed of cotton, seed of maize/corn, seed of soybean, seed of rice, seed of sunflower, seed of tomato, seed of wheat, provide benefits to the germinating seed, including improved germination, faster emergence and seedling establishment, and improved early development of roots and foliage. By positioning the beneficial bacteria in the coating on the surface of a seed to form the coated seed according to the present invention, as it germinates, the new plant can benefit immediately from the activities of the soil activator bacteria as they increase the availability of nutrients in the soil around the growing root and reduce nutrient loss through leaching.

More particularly, said soil activator composition of said coating comprises at least one additive in an amount between 0.1 wt% and 30 wt%, preferably between 0.5 wt% and 30 wt%, preferably between 1.0 wt% and 30 wt%, preferably between 5 wt% and 30 wt%, preferably between 10 wt% and 30 wt%, preferably between 10 wt% and 25 wt%.

For example, said at least one additive is present in an amount of 1.5 wt%, 2.0 wt%, 2.5 wt%, 3.0 wt%, 3.5 wt%, 4.0 wt%, 4.5 wt%, 5.0 wt%, 5.5 wt%, 6.0 wt%, 6.5 wt%, 7.0 wt%, 7.5 wt%, 8.0 wt%, 8.5 wt%, 9.0 wt%, 9.5 wt%, 10 wt%, 10.5 wt%, 11 wt%, 11.5 wt%, 12 wt%, 12.5 wt%, 13 wt%, 13.5 wt%, 14 wt%, 14.5 wt%, 15 wt%, 15.5 wt%, 16 wt%, 16.5 wt%, 17 wt%, 17.5 wt%, 18 wt%, 18.5 wt%, 19 wt%, 19.5 wt%, 20 wt%, 20.5 wt%, 21 wt%, 21.5 wt%, 22 wt%, 22.5 wt%, 23 wt%, 23.5 wt%, 24 wt%, 24.5 wt%, 25 wt%, 25.5 wt%, 26 wt%, 26.5 wt%, 27 wt%, 27.5 wt%, 28 wt%, 28.5 wt%, 29 wt%, 29.5 wt%, 30 wt%.

More preferably said at least one additive is selected from the group comprising seaweed powder and other plant-based powdered extracts, humic and/or fulvic acids, natural rock dusts such as wollastonite, basalt, diatomite etc., frass, and their mixture.

Preferably said at least one additive is selected from the group comprising calcium-based compounds, such as CaO, phosphorus-based compounds, such as P₂O₅, magnesium-based compounds, such as MgO, potassium-based compounds, such as K₂O, nitrogen-based compounds, such as NH₄⁺, sulfur-based compounds, such as SO₄²⁻, and their mixture, preferably said nitrogen is present in an amount from 2 to 6 weight% based on the total weight of the soil activator composition, and/or in said soil activator composition of said coating phosphorus is present in an amount comprised between 0.15 and 0.4 equivalent P₂O₅ weight % based on the total weight of the soil activator composition, and/or in said soil activator composition of said coating potassium is present in an amount between 0.15 and 0.4 equivalent K₂O weight % based on the total weight of the soil activator composition, and/or in said soil activator composition of said coating sulphur is present in an amount comprised between 2 to 8 weight % based on the total weight of the soil activator composition, and/or in said soil activator composition of said coating calcium is present between 0.1 and 0.2 equivalent CaO weight % based on the total weight of the soil activator composition, and/or in said soil activator composition of said coating magnesium is present in an amount comprised between 0.05 and 0.1 equivalent MgO weight % based on the total weight of the soil activator composition.

While it is preferable to keep the number of ingredients as low as possible for some ecological certifications or for keeping the environmental impact as low as possible, it is not excluded according to the present invention to have some nutrient additives or other additives for specific applications.

Advantageously, said at least a binding agent of the coating of said coated seed according to the present invention is chosen from the group comprising mineral oil, water, vegetable oil, crude glycerin, natural or biobased polymers, and their mixture.

Even more advantageously, said coating of said coated seed according to the present invention comprises between 15 wt% and 85 wt% of said binding agent, preferably between 30 wt% and 80 wt%, more preferably between 35 wt% and 75 wt%, even more preferably between 40 wt% and 75 wt%, advantageously between 45 wt% and 75 wt%, in particular between 50 wt% and 75 wt%.

For example, said coating of said coated seed according to the present invention comprises 50 wt% of said binding agent, 51 wt%, 52 wt%, 53 wt%, 54 wt%, 55 wt%, 56 wt%, 57 wt%, 58 wt%, 59 wt%, 60 wt%, 61 wt%, 62 wt%, 63 wt%, 64 wt%, 65 wt%, 66 wt%, 67 wt%, 68 wt%, 69 wt%, 70 wt%, 71 wt%, 72 wt%, 73 wt%, 74 wt%, 75 wt%, 76 wt%, 77 wt%, 78 wt%, 79 wt%, 80 wt%, 81 wt%, 82 wt%, 83 wt%, 84 wt% or 85 wt% of said binding agent.

In particular, said coating of said coated seed according to the present invention comprises between 15 wt% and 85 wt% of said soil activator composition, preferably between 20 wt% and 75 wt%, more preferably between 25 wt% and 65 wt%, even more preferably between 25 wt% and 60 wt%, advantageously between 25 wt% and 55 wt%, in particular between 25 wt% and 50 wt%.

For example, said coating of said coated seed according to the present invention comprises 25 wt% of said soil activator composition, 26 wt%, 27 wt%, 28 wt%, 29 wt%, 30 wt%, 31 wt%, 32 wt%, 33 wt%, 34 wt%, 35 wt%, 36 wt%, 37 wt%, 38 wt%, 39 wt%, 40 wt%, 41 wt%, 42 wt%, 43 wt%, 44 wt%, 45 wt%, 46 wt%, 47 wt%, 48 wt%, 49 wt% or 50 wt% of said soil activator composition.

For example, in the soil activator composition of said coating according to the present invention, nitrogen is present in an amount from 2 to 6 weight% based on the total weight of the soil activator composition.

In another exemplary composition according to the present invention, phosphorus is present in an amount comprised between 0.15 and 0.4 equivalent P₂O₅ weight % based on the total weight of the soil activator composition.

In yet another exemplary soil activator composition according to the present invention, potassium is present in an amount between 0.15 and 0.4 equivalent K₂O weight % based on the total weight of the soil activator composition.

In another exemplary soil activator composition according to the present invention, sulphur is present in an amount comprised between 2 to 8 weight % based on the total weight of the soil activator composition.

In still another exemplary soil activator composition according to the present invention, calcium is present between 0.1 and 0.2 equivalent CaO weight % based on the total weight of the soil activator composition.

In one other exemplary soil activator composition according to the present invention, magnesium is present in an amount comprised between 0.05 and 0.1 equivalent MgO weight % based on the total weight of the soil activator composition.

More particularly, said calcium lignosulfonate contains between 4 and 9 wt% of calcium equivalent CaO % based on the total weight of said at least one calcium lignosulfonate.

In one particular embodiment, said soil activator composition of the coating of said coated seed according to the present invention has an additional biofungicide activity. It helps to suppress certain diseases.

In a certain embodiment, the disease that is suppressed by said soil activator coating of said coated seed is selected from the list: Phytophthora infestans, Alternaria solani, Fusarium oxysporum lycopersici, Botrytis cinerea, Sclérotinia, Phoma du colza (Leptosphaeria maculans), Microdochium nivale, Verticillium dahlia, Mycosphaerella fijiensis.

In another embodiment of the present invention, said coated seed comprises at least a seed and at least a coating, said seed is chosen in the group comprising seed of cotton, seed of maize/corn, seed of soybean, seed of rice, seed of sunflower, seed of tomato, seed of wheat, said coating comprises at least a binding agent and a mixture of frass, preferably chosen in the group comprising frass from insects, frass from fish or shellfish, and their mixture, and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years

It is understood from the present invention that "frass" is a general term that means the things that insects, larvae, fish, shellfish, leave behind. For example, frass contains excrement produced from all the things they (insects, larvae, fish, shellfish etc...) consume as they go along like wood, human food, plant material, and other materials. Frass can also contain chitin, which is the main component in the exoskeletons of insects and shellfish. Moreover, the nutrients in frass, used as additive according to the present invention, are in a readily available form that allows it to function more efficiently than a slow-release mineral or organic fertilizer.

Moreover, according to the present invention, using said coating comprising a mixture of said soil activator composition and frass, allows a better seed germination and plant establishment, improved crop vigor and health, increased nutrient density, higher yields and improved soil health.

In particular, the production of insects is an expanding market, notably Black Soldier Flies (Hermetica illucens), mealworms (or yellow mealworm beetle, Tenebrio molitor), and crickets (superfamily *Grylloidea*). Though frass is a byproduct of the primary production of these insects and insects in a more general manner, there is a growing interest in its value as an agricultural amendment, in particular in terms of frass as additional fertilizer.

In a preferred embodiment, the coated seed according to the present invention presents a coating with a thickness comprised between 30 nanometers and 3 millimeters, preferably comprised between 1 µm and 2 mm. Said thickness of said coating according to the present invention is measured by cutting cross-sections of said coated seed and using microscopy to evaluate the thickness of the coating.

For example, said coated seed according to the invention presents a coating with a thickness comprised between 50 nm and 3 mm, for example between 100 nm and 3 mm, between 200 nm and 3 mm, between 300 nm and 3 mm, between 400 nm and 3 mm, between 500 nm and 3 mm, between 600 nm and 3 mm, between 700 nm and 3 mm, between 800 nm and 3 mm, between 900 nm and 3 mm, between 1 µm and 3 mm, between 1 µm and 2.9 mm, between 1 µm and 2.8 mm, between 1 µm and 2.7 mm, between 1 µm and 2.6 mm, between 1 µm and 2.5 mm, between 1 µm and 2.4 mm, between 1 µm and 2.3 mm, between 1 µm and 2.2 mm, between 1 µm and 2.1 mm.

For example, said coated seed according to the invention presents a coating with a thickness of 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 25 µm, 30 µm, 35 µm, 40 µm, 45 µm, 50 µm, 55 µm, 60 µm, 65 µm, 70 µm, 75 µm, 80 µm, 85 µm, 90 µm, 95 µm, 100 µm, 125 µm, 150 µm, 175 µm, 200 µm, 225 µm, 250 µm, 275 µm, 300 µm, 325 µm, 350 µm, 375 µm, 400 µm, 425 µm, 450 µm, 475 µm, 500 µm, 525 µm, 550 µm, 575 µm, 600 µm, 625 µm, 650 µm, 675 µm, 700 µm, 725 µm, 750 µm, 775 µm, 800 µm, 825 µm, 850 µm, 875 µm, 900 µm, 925 µm, 950 µm, 975 µm, 1mm, 1.1mm, 1.2mm, 1.3mm, 1.4mm, 1.5mm, 1.6mm, 1.7mm, 1.8mm, 1.9mm, 2.0mm.

In another preferred embodiment of the present invention, said at least a coating of said coated seed represents an increase of the weight of said at least a seed comprised between 0.1% and 5000%. For example coating between 0.1% and 10%, encrusting between 5% and 500%, and pelleting between 500 and 5000%. Said increase of the weight according to the present invention is determined by measuring the Thousand Seed Weight before and after said coating application and calculating the percentage increase.

For example, said at least a coating of said coated seed represents an increase of the weight of said at least a seed of 0.1%, 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.0%, 3.1%, 3.2%, 3.3%, 3.4%, 3.5%, 3.6%, 3.7%, 3.8%, 3.9%, 4.0%, 4.1%, 4.2%, 4.3%, 4.4%, 4.5%, 4.6%, 4.7%, 4.8%, 4.9%, 5.0%, 5.1%, 5.2%, 5.3%, 5.4%, 5.5%, 5.6%, 5.7%, 5.8%, 5.9%, 6.0%, 6.1%, 6.2%, 6.3%, 6.4%, 6.5%, 6.6%, 6.7%, 6.8%, 6.9%, 7.0%, 7.1%, 7.2%, 7.3%, 7.4%, 7.5%, 7.6%, 7.7%, 7.8%, 7.9%, 8.0%, 8.1%, 8.2%, 8.3%, 8.4%, 8.5%, 8.6%, 8.7%, 8.8%, 8.9%, 9.0%, 9.1%, 9.2%, 9.3%, 9.4%, 9.5%, 9.6%, 9.7%, 9.8%, 9.9%, 10%, 15%, 20%, 25%, 30%, 35%, 40%, 45%, 50%, 55%, 60%, 65%, 70%, 75%, 80%, 85%, 90%, 95%, 100%, 105%, 110%, 115%, 120%, 125%, 130%, 135%, 140%, 145%, 150%, 155%, 160%, 165%, 170%, 175%, 180%, 185%, 190%, 195%, 200%, 205%, 210%, 215%, 220%, 225%, 230%, 235%, 240%, 245%, 250%, 255%, 260%, 265%, 270%, 275%, 280%, 285%, 290%, 295%, 300%, 305%, 310%, 315%, 320%, 325%, 330%, 335%, 340%, 345%, 350%, 355%, 360%, 365%, 370%, 375%, 380%, 385%, 390%, 395%, 400%, 405%, 410%, 415%, 420%, 425%, 430%, 435%, 440%, 445%, 450%, 455%, 460%, 465%, 470%, 475%, 480%, 485%, 490%, 495%, 500%, 525%, 550%, 575%, 600%, 625%, 650%, 675%, 700%, 725%, 750%, 775%, 800%, 825%, 850%, 875%, 900%, 925%, 950%, 975%, 1000%, 1025%, 1050%, 1075%, 1100%, 1125%, 1150%, 1175%, 1200%, 1225%, 1250%, 1275%, 1300%, 1325%, 1350%, 1375%, 1400%, 1425%, 1450%, 1475%, 1500%, 1525%, 1550%, 1575%, 1600%, 1625%, 1650%, 1675%, 1700%, 1725%, 1750%, 1775%, 1800%, 1825%, 1850%, 1875%, 1900%, 1925%, 1950%, 1975%, 2000%, 2025%, 2050%, 2075%, 2100%, 2125%, 2150%, 2175%, 2200%, 2225%, 2250%, 2275%, 2300%, 2325%, 2350%, 2375%, 2400%, 2425%, 2450%, 2475%, 2500%, 2525%, 2550%, 2575%, 2600%, 2625%, 2650%, 2675%, 2700%, 2725%, 2750%, 2775%, 2800%, 2825%, 2850%, 2875%, 2900%, 2925%, 2950%, 2975%, 3000%, 3025%, 3050%, 3075%, 3100%, 3125%, 3150%, 3175%, 3200%, 3225%, 3250%, 3275%, 3300%, 3325%, 3350%, 3375%, 3400%, 3425%, 3450%, 3475%, 3500%, 3525%, 3550%, 3575%, 3600%, 3625%, 3650%, 3675%, 3700%, 3725%, 3750%, 3775%, 3800%, 3825%, 3850%, 3875%, 3900%, 3925%, 3950%, 3975%, 4000%, 4025%, 4050%, 4075%, 4100%, 4125%, 4150%, 4175%, 4200%, 4225%, 4250%, 4275%, 4300%, 4325%, 4350%, 4375%, 4400%, 4425%, 4450%, 4475%, 4500%, 4525%, 4550%, 4575%, 4600%, 4625%, 4650%, 4675%, 4700%, 4725%, 4750%, 4775%, 4800%, 4825%, 4850%, 4875%, 4900%, 4925%, 4950%, 4975%, 5000%.

Preferably, said coated seed according to the present invention presents a surface friction comprised of friction coefficients between 0.2 and 0.7, preferably between 0.4 and 0.6 when subjected to forces ranging from 50 mN to 150 mN. Measured using a nanotribometer (for example, NanoTest^{™} Vantage^{™} manufactured by Micro Materials Ltd. in Wrexam, United Kingdom).

In particular, said soil activator composition of said at least a coating of said coated seed according to the invention presents a high solubility, for example a solubility higher than or equal to 250 grams per Liter (g/L) at 25°C, preferably up to 500 g/L at 25°C. More particular, said at least a coating of said coated seed according to the present invention is advantageously fully solubilized within at least 60 minutes or preferably within at least 30 minutes. Measured using method ASTM E1148 - 02 "Standard Test Method for Measurements of Aqueous Solubility".

More particular, said coated seed according to the present invention presents a mechanical resistance no less than 95%, preferably higher than 100%, of the mechanical resistance presented by uncoated seeds of the same type, after drying and up to 2 years of storage. Measured using a compression test.

More particularly, said coating of said coated seed according to the present invention increases the moisture level of the said seed by less than 1 weight% and preferably less than 0.5%, in order to prevent premature germination of the seeds.

The moisture of the coated seeds can be measured quickly and non-destructively using a hygrometer.

Alternatively, moisture level can be measured destructively by the oven drying method. In this method, 10- or 15-gram samples of coated seeds are measured into metal containers with tight-fitting lids. They are then placed in an oven with the lids removed for 24 hours at 100°C, or for 2 hours at 130°C. After the drying process is complete, the lids are replaced on the containers while the samples cool to room temperature and the dry weight is measured. The loss of weight from the sample is used to calculate the percentage of moisture in the original sample as per the formula [change in weight] ÷ [original weight] × 100 = % moisture.

In one embodiment, the wettable powder soil activator composition of the coating has a mean particle size of about 85 µm to ensure a convenient use of the composition, i.e. quickly suspended/solubilized in water or other liquids, compatible with most agricultural liquid application equipment, able to be coated on seed to form coated seed according to the present invention.

In one preferred embodiment, the soil activator composition of said coating of said coated seed according to the present invention comprises insoluble matter to a maximum of 1 weight% of the total weight of the soil activator composition in said coating, said insoluble matter having any dimension smaller than 100 µm.

Other embodiments of the coated seed according to the present invention are mentioned in the appended claims and the subsequent description of an embodiment of the invention.

The present invention also relates to a method for preparing a coated seed according to the present invention.

Preferably, said method for preparing a coated seed according to the present invention comprises the following steps:
- Preparing a bacterial mixture with lyophilized bacteria by dosing the at least a rhizobacteria to reach at least 2.55 billion (2.55×10⁹) cfu rhizobacteria /g soil activator composition, measured according to ASTM-D5465-93 (dated 1998) standard and the at least a bacteria with some antifungal activity to reach at least 2 billion (2×10⁹) cfu of at least a bacteria with some antifungal activity /g soil activator composition measured according to ASTM-D5465-93 (dated 1998) standard,
- Mixing said bacterial mixture with at least a carrierchosen in the group comprising sodium lignosulfonate, calcium lignosulfonate, ammonium lignosulfonate, maltodextrine, bentonite, diatomite, sepiolite, silicate, corn syrup solids, dextrose, lactose, powdered molasses, calcium phosphate and other rock powders, and their mixture, to form said soil activator composition,
   - Combining, in a mixer, said soil activator composition with at least a seed chosen in the group comprising seed of cotton, seed of maize/corn, seed of soybean, seed of rice, seed of sunflower, seed of tomato, seed of wheat, and at least a binding agent, either by mixing said soil activator composition with said at least binding agent and then blending said blend of binding agent and soil activator composition with the at least a seed, or by mixing the soil activator composition with the at least a seed and then adding said at least binding agent,
   - Blending the mix for a predetermined period of time, preferably between 1 and 15 minutes, in particular between 1 and 10 minutes, more particular between 2 and 5 minutes, or until all seeds are evenly coated, to obtain said coated seed.

Said mix in the blending step is a mix with said soil activator composition, said binding agent and said at least a seed chosen in the group comprising seed of cotton, seed of maize/corn, seed of soybean, seed of rice, seed of sunflower, seed of tomato, seed of wheat.

As it can be seen, in the method according to the present invention, the bacterial mixture is prepared with a high count of bacteria to ensure the minimal cfu is still achieved after extended shelf life while not diluting the lignosulfonate content and not requiring the addition of aids or mandatory additives to obtain a stable wettable powder soil activator composition.

Said mixer according to the invention is for example chosen in the group comprising a rotating pan, a pan granulator, a disc granulator, a rotary seed pelleting machine, a paddle mixer, a fluidized bed, a spouted bed, a rotary coater, a roto-stator, a ribbon mixer, a ploughshare mixer, a single or double screw mixer, a "concrete mixer" type rotary mixer, a vertical or horizontal shaft mixer, a seed coating device, and their combination.

Preferably, said method for preparing a coated seed according to the present invention comprises an additional step of addition of a desiccating agent during said step of combining, in a mixer, said soil activator composition with said at least a seed.

Preferably, said method for preparing a coated seed according to the present invention comprises an additional step of drying said coated seed according to the invention, more preferably during a predetermined period of time comprised between 15 mn and 4 hours, preferably between 30 mn and 3 hours, even more preferably between 1 hour and 2 hours.

Accordingly, the method according to the present invention is very simple and allows to reach an ecological formulation with a low environmental footprint.

Other embodiments of the method according to the present invention are mentioned in the appended claims and the subsequent description of an embodiment of the invention.

The present invention also relates to the utilization of said coated seed to improve the germination of said seed and/or to improve plant growth rate from said seed and/or to improve roots growth rate from said seed.

Seeds coated as the present invention provide benefits to the germinating seed, including improved germination, faster emergence and seedling establishment, and improved early development of roots and foliage. By positioning the beneficial bacteria in the coating on the surface of a seed to from the coated seed according to the present invention, as it germinates, the new plant can benefit immediately from the activities of the soil activator bacteria as they increase the availability of nutrients in the soil around the growing root and reduce nutrient loss through leaching.

Other embodiments of the utilization according to the present invention are mentioned in the appended claims and the subsequent description of an embodiment of the invention.

Other characteristics and advantages of the present invention will be derived from the non-limitative following description, and by making reference to the drawings and the examples.

### Example 1.-

A wettable powder soil activator composition was prepared by measuring the necessary quantities of high-count Bacillus subtilis, Bacillus amyloliquefaciens, and Pseudomonas monteilii powders to achieve each of their target counts in the finished formula (1.25 billion cfu/g, 25 million cfu/g, and 400 million cfu/g, respectively (1.25×10⁹ cfu/g, 2.5×10⁷ cfu/g, and 4.0×10⁸ cfu/g, respectively)). The three powders were combined to form a bacterial mixture having a weight of 2.12 grams.

The bacterial mixture was added to 997.88 grams of sodium lignosulfonate and mixed until a homogeneous wettable powder composition of one kilogram was achieved.

The actual ratios of the three species at the time of manufacturing include more Pseudomonas to make sure that the product does not lose its balance during its 3-year shelf life, because that species has a shorter shelf life than the other two.

The count of bacteria (cfu) after three years of storage is above 2.48×10⁸ cfu Bacillus subtilis per gram of solid soil activator composition, above 5.0×10⁶ cfu Bacillus amyloliquefaciens per gram of solid soil activator composition and 1.0×10⁷ cfu Pseudomonas monteilii per gram of solid soil activator composition.

At the time of production, the count of bacteria in cfu was performed by using two methodologies:
1: Total Plate Count. This quantifies the total number of viable bacteria in the product but cannot separate the different species. The measurement was performed according to ASTM-D5465-93 (dated 1998) standard.
2: qPCR. This is a genetic test based on the amount of unique DNA in the sample from the three species, so it can quantify the levels of each species separately. However, it does not differentiate between living and non-living bacteria. The test was performed according to the ASTM D8412-21 standard - Standard Guide for Quantification of Microbial Contamination in Liquid Fuels and Fuel-Associated Water by Quantitative Polymerase Chain Reaction (qPCR).

### EXAMPLE 2.- Storage of wettable powder soil activator composition at elevated temperature ("accelerated shelf life test")

One soil activator composition was prepared using three bacteria strains : Bacillus subtilis, Bacillus amyloliquefaciens, and Pseudomonas monteilii.

The bacteria were blended with dry powdered sodium lignosulfonate to obtain said soil activator composition according to the present invention, then stored in sealed plastic bags at 43°C.

Subsamples were removed periodically to measure the total quantity of bacteria using the total plate count method (ASTM-D5465-93, dated 1998). The final measurement was made after storage for 56 days, equivalent to 3 years.

The results of the total plate counts on each date were transformed using the log₁₀ and then standardized on each date by calculating the percentage of the original counts on day 0. These values were plotted to identify the evolution of the quantity of viable cells in said soil activator composition over time.

The soil activator composition according to the present invention had a starting bacteria count of 3.55×10⁸ cfu/g. The counts on each date are presented in the following table:

**Table 1: Total Plate Counts of soil activator composition stored at 43° Celsius: "SLS" was a soil activator formulated with sodium lignosulfonate. The table includes the Log₁₀ transformations of the bacteria counts, and the calculation of the percentage of initial counts on each measurement date.**

| | | **Day** | | | | |
|---|---|---|---|---|---|---|
| | | *0* | *7* | *14* | *28* | *56* |
| **SLS** | *Counts (CFU*/*g)* | 3.55×10^8 | 2.88×10^8 | 2.70×10^8 | 3.80×10^8 | 1.07×10^9 |
| | *Log₁₀* | 8.55 | 8.46 | 8.43 | 8.58 | 9.03 |
| | % of *initial* | 100% | 99% | 99% | 100% | 106% |

The bacteria counts in the soil activator composition with sodium lignosulfonate according to the present invention remained near 100% for the duration of the test, indicating that sodium lignosulfonate provides extended shelf-life and stability to the bacteria.

### EXAMPLE 3.- Storage of wettable powder soil activator composition at room temperature for 3 years

One soil activator composition was prepared using three bacteria strains : Bacillus subtilis, Bacillus amyloliquefaciens, and Pseudomonas monteilii.

The bacteria were blended with dry powdered sodium lignosulfonate to obtain said soil activator composition according to the present invention, then stored in sealed plastic bags at room temperature for3years and was tested using qPCR analysis.

This is a genetic test based on the amount of unique DNA in the sample from the three species, so it can quantify the levels of each species separately. The test was performed according to the ASTM D8412-21 standard - Standard Guide for Quantification of Microbial Contamination in Liquid Fuels and Fuel-Associated Water by Quantitative Polymerase Chain Reaction (qPCR). The results of this analysis were compared to the results of Total Plate Count method testing performed on the same lot after the production.

The Soil Activator composition according to the present invention has been tested after the production by a third party lab using the Total Plate Count methodology, with a result of 5.9×10⁸ cfu/g.

After 3 years of storage at room temperature, a sample was taken from said Soil Activator composition according to the invention. The sample was analysed by a third-party lab using the qPCR method. Based on this methodology, it has been found a total of 1.88×10⁹ cfu/g in the sample.

Thus, it has been concluded that the bacterial mixture and more specifically the bacteria Bacillus subtilis, Bacillus amyloliquefaciens and Pseudomonas monteilii was still present in the Soil Activator composition at the specified levels after 3 years of storage, moreover it indicates that sodium lignosulfonate provides extended shelf-life and stability to the bacteria.

### EXAMPLE 4.- coated seed according to the present invention

A wettable powder soil activator composition was prepared by measuring the necessary quantities of high-count Bacillus subtilis, Bacillus amyloliquefaciens, and Pseudomonas monteilii powders to achieve each of their target counts in the finished formula (18 billion cfu/g, 800 million cfu/g, and 1 billion cfu/g, respectively (1.8×10¹⁰ cfu/g, 8.0×10⁸ cfu/g, and 1.0×10⁹ cfu/g, respectively)). The three powders were combined to form a bacterial mixture having a weight of 31.75 grams.

The bacterial mixture was added to 968.25 grams of sodium lignosulfonate and mixed until one kilogram of a homogeneous wettable powder soil activator composition was created according to the invention.

This soil activator composition was combined with water as binding agent to create liquid form of the said coating according to the invention. A small amount of soil activator composition was added to said water and mixed. Additional soil activator composition was gradually incorporated until just before the viscosity of the mixture became too high. This ensured that the coating liquid would still be workable in the production process.

The inventors found that soil activator composition was easy to incorporate with water as binding agent. Viscosity started increasing in the range 25 wt% soil activator composition with 75 wt% water, until 50 wt% soil activator composition with 50 wt% water. Thus, for example, every 100 grams of said slurry contain between 25 and 50 grams of said soil activator composition.

Once the coating liquid (soil activator composition with water as binding agent) was created, 100 grams of commercially available corn (maize) seed was added to a beaker and placed under a vertical paddle mixer, and the motor was engaged to begin a slow rotation. A small amount of said coating was added to the drum and allowed to mix for 2 minutes. The seeds were inspected for the evenness of the coating, as well as the apparent stickiness of the coated seeds. Additional product was incorporated in stages with repeated observations of physical condition until a total amount of 3 mL of said slurry had been added (approximately 3 wt%), to obtain coated corn seeds according to the present invention coated with soil activator composition with water as binding agent.

The slurry was also applied using the same process to rice to produce a similar supply of coated rice seeds according to the present invention coated with soil activator composition with water as binding agent.

Coated corn and coated rice seeds were placed on paper towels over night to dry to simulate 1-2 hours of fan drying, and then stored in plastic bags at room temperature until testing. After several days of storage, the coated seeds were evaluated for their physical condition, there was no observed stickiness or agglomeration or softening of the coated seeds according to the invention.

Two different tests were performed: germination and plant bioassay.

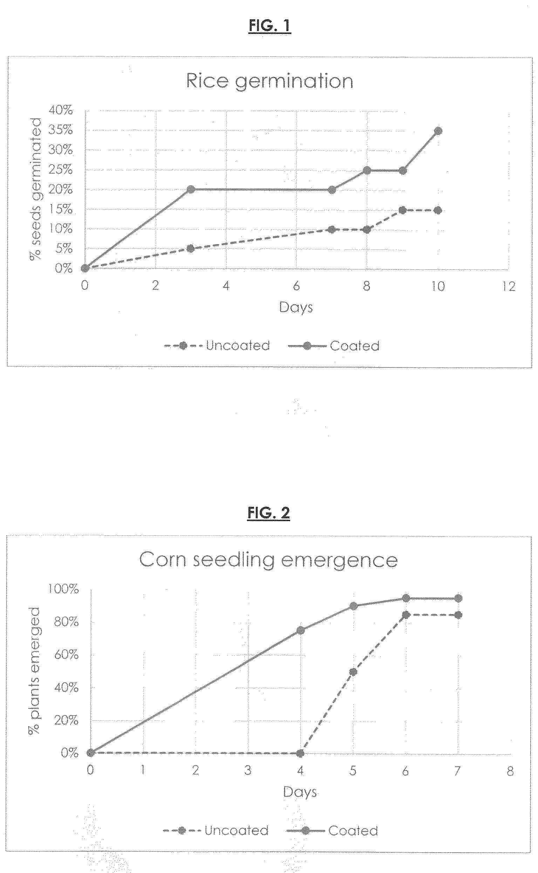

For the germination test, a first set of 20 coated rice seeds according to the present invention were lined up on a moist paper towel and then rolled up and stored in a sealed plastic bag. A second set of 20 uncoated seeds were stored in the same way as a comparison. In the following days, the number of seeds showing visible sprouts were counted, and a percentage germination was calculated as [number of sprouts] ÷ 20 × 100 = % germination. The results of the test are shown in the following figure 1.

FIG. 1 represents rice germination from rice seeds coated according to the invention with soil activator using water as a binding agent (solid line), compared to germination of rice seeds that have not been coated (dashed line).

After 3 days, 20% of the coated seeds had sprouted, while 5% of the uncoated seeds had visible sprouts. By the 10^{th} day the coated rice seeds had reached 35% germination, while the uncoated rice was only sprouted in 15% of the seeds.

For the plant bioassay, 10 square pots of 4" size were filled with standard potting mix (Professional All Purpose Growing Mix from Lambert Peat Moss in Quebec, Canada). Five pots were planted with coated corn seeds according to the present invention, and five pots were planted with uncoated corn seeds of the same type. No other fertilizer was added to the pots. The pots were then watered and placed on a growth shelf with 24-hour light. Corn plant emergence and early growth rates of the corn seedlings were monitored for 10 days to evaluate the performance of seeds coated according to the present invention compared to seeds without any coating.

The rate of emergence of seedlings was superior in the seeds coated according to the present invention. The results can be found in the following figure 2.

FIG. 2 represents corn seedling emergence from seeds coated with soil activator using water as binding agent according to the present invention (solid line), compared to emergence from seeds that have not been coated (dashed line).

Four days after planting, the coated seeds according to the invention were already 75% emerged, while no uncoated seeds showed any emergence. After 7 days from planting, the average emergence had increased in both coated and uncoated seeds though the coated seeds were still superior to the uncoated with 95% emergence in the coated seeds compared to 85% emergence in the uncoated seeds.

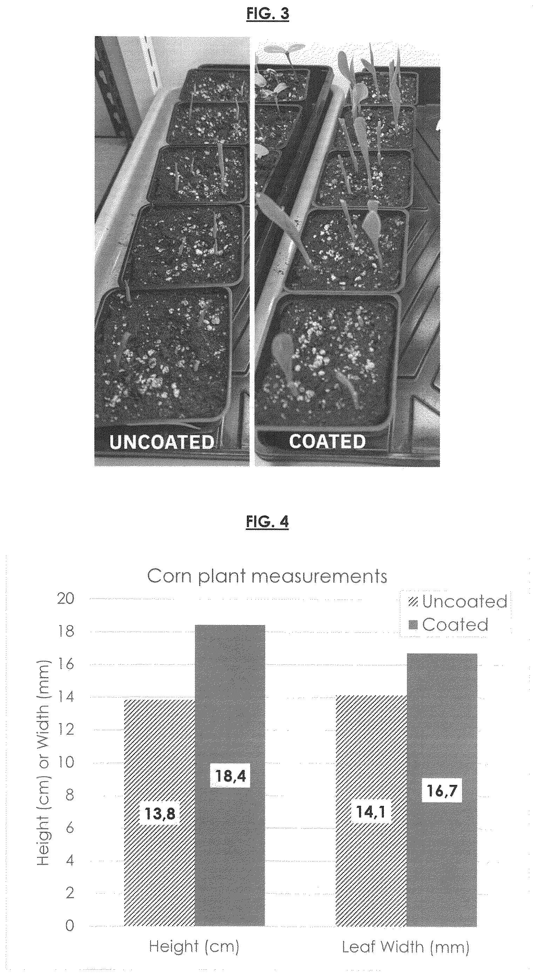

The corn plants from seeds coated according to the present invention also grew faster than the uncoated seeds. After 6 days the corn seedlings from coated seeds were significantly larger than the seedlings from uncoated seeds. The seedlings from coated and uncoated seeds are presented in the following figure 3.

FIG. 3 represents corn seedlings 6 days after planting, grown from seeds that have been coated with soil activator using water as binding agent according to the present invention (right) and seeds that have not been coated (left).

On the 10^{th} day after planting, the seedling heights and leaf widths of the corn grown from coated and uncoated seeds were measured. Height was measured from the soil surface to the top of the tallest leaf, and width was measured at the widest point of the largest leaf on each plant. The results are presented in the following figure 4. The measurements showed that corn plants grown from seeds coated according to the present invention grew 33% taller in the first 10 days, and the leaves were 18% wider. Taller plants are better able to compete with weeds for sunlight, and wider leaves give plants superior capacity for photosynthesis.

FIG. 4 represents plant height and leaf width measurements from corn seedlings 10 days after planting. Plants were grown either from seeds coated according to the present invention (solid orange) or seeds that were not coated (hatched gray).

It should be understood that the present invention is not limited to the described embodiments and that variations can be applied without going outside of the scope of the claims.

For example, the number of cfu was measured typically according to ASTM-D5465-93 (dated 1998) standard but it is also foreseen to measure the number of cfu viable bacteria is measured by the methodology of quantitative real-time polymerase chain reaction (qPCR)performed according to the ASTM D8412-21 standard - Standard Guide for Quantification of Microbial Contamination in Liquid Fuels and Fuel-Associated Water by Quantitative Polymerase Chain Reaction (qPCR).

## Claims

1. A coated seed comprising at least a seed and at least a coating, said seed is chosen in the group comprising seed of cotton, seed of maize/corn, seed of soybean, seed of rice, seed of sunflower, seed of tomato, seed of wheat, said coating comprises at least a binding agent and a soil activator composition having an extended shelf-life duration, said soil activator composition comprises at least a carrier and at least a bacterial mixture containing at least a rhizobacteria species and at least a bacteria species with some antifungal activity, and containing at least 263 million (2.63×10⁸) cfu total bacteria /g soil activator composition after said extended shelf life measured according to ASTM-D5465-93 (dated 1998) standard, said extended shelf life is higher than or equal to 2 years, preferably higher than or equal to 3 years.

2. The coated seed according to claim 1, wherein said at least one rhizobacteria species of said soil activator composition is a plant growth-promoting rhizobacteria, preferably chosen in the group comprising Bacillus subtilis, Bacillus megaterium, Bacillus megaterium var. phosphaticum, Bacillus oleronius, Bacillus velezensis, Bacillus tequilensis, Bacillus cereus, Acinetobacter genus, Arthrobacter genus, Azoarcus species, Azospirillum species, Azospirillum brasilense, Azotobacter genus, Beijerinckia fluminensis, Bradyrhizobium species, Rhizobium species, Agrobacterium fabrum, Burkholderia vietnamiensis, Burkholderia cepacian, Enterobacter genus, Serratia species, Frankia, Acetobacter genus, Gluconacetobacter species, Gluconobacter species, Klebsiella, Pseudomonas genus, Streptomyces genus, Alcaligenes faecalis, Jeotgalicoccus genus, Paenibacillus alvei, Stenotrophomonas maltophilia, Achromobactergenus, Achromobacterxylosoxidans, Lactic acid bacteria, Chaetomium globosum, Exiguobacterium oxidotolerans, Herbaspirillum species, and their combination, more preferably said plant growth-promoting rhizobacteria is Bacillus subtilis.

3. The coated seed according to claim 1 or 2, wherein said at least one bacteria species with some antifungal activity is chosen in the group comprising Pseudomonas monteilii, Pseudomonas fluorescens, Pseudomonas putida, Bacillus amyloliquefaciens, Bacillus pumilis, Bacilus liqueniformis, and their combination, preferably said bacterial mixture contains at least two bacteria species with some antifungal activity, more preferably said bacterial mixture contains at least three bacteria species with some antifungal activity.

4. The coated seed according to any one of preceding claims, wherein said bacterial mixture of said soil activator composition of said coating contains at least 240 million (2.4×10⁸) cfu of Bacillus subtilis/g soil activator composition after said extended shelf life, measured according to ASTM-D5465-93 (dated 1998) standard, preferably at least 500 million (5.0×10⁸) cfu of Bacillus subtilis/g soil activator composition, more preferably at least 800 million (8.0×10⁸) cfu of Bacillus subtilis/g soil activator composition, even more preferably at least 1 billion (1.0×10⁹) cfu of Bacillus subtilis/g soil activator composition, in particular at least 1.4 billion (1.4×10⁹) cfu of Bacillus subtilis/g soil activator composition, more particular at least 1.8 billion (1.8×10⁹) cfu of Bacillus subtilis/g soil activator composition, even more particular at least 2.0 billion (2.0×10⁹) cfu of Bacillus subtilis/g soil activator composition, advantageously at least 2.4 billion (2.4×10⁹) cfu of Bacillus subtilis/g soil activator composition, more preferably at least 3.0 billion (3.0×10⁹) cfu of Bacillus subtilis/g soil activator composition, more preferably at least 4.0 billion (4.0×10⁹) cfu of Bacillus subtilis/g soil activator composition, even more preferably at least 5 billion (5.0×10⁹) cfu of Bacillus subtilis/g soil activator composition, in particular at least 6 billion (6.0×10⁹) cfu of Bacillus subtilis/g soil activator composition, more particular at least 7 billion (7.0×10⁹) cfu of Bacillus subtilis/g soil activator composition, even more particular at least 8 billion (8.0×10⁹) cfu of Bacillus subtilis/g soil activator composition, advantageously at least 9 billion (9.0×10⁹) cfu of Bacillus subtilis/g soil activator composition, advantageously at least 10 billion (1.0×10¹⁰) cfu of Bacillus subtilis/g soil activator composition, more preferably at least 12 billion (1.2×10¹⁰) cfu of Bacillus subtilis/g soil activator composition, more preferably at least 14 billion (1.4×10¹⁰) cfu of Bacillus subtilis/g soil activator composition, even more preferably at least 16 billion (1.6×10¹⁰) cfu of Bacillus subtilis/g soil activator composition, in particular at least 18 billion (1.8×10¹⁰) cfu of Bacillus subtilis/g soil activator composition, more particular at least 19 billion (1.9×10¹⁰) cfu of Bacillus subtilis/g soil activator composition, even more particular at least 20 billion (2.0×10¹⁰), preferably at least 25 billion (2.5×10¹⁰) cfu of Bacillus subtilis/g soil activator composition, and/or said bacterial mixture of said soil activator composition of said coating contains at least 5 million (5.0×10⁶) cfu of Bacillus amyloliquefaciens/g soil activator composition after said extended shelf life measured according to ASTM-D5465-93 (dated 1998) standard, preferably at least 10 million (1.0×10⁷) cfu of Bacillus amyloliquefaciens/g soil activator composition, more preferably at least 30 million (3.0×10⁷) cfu of Bacillus amyloliquefaciens/g soil activator composition, even more preferably at least 50 million (5.0×10⁷) cfu of Bacillus amyloliquefaciens/g soil activator composition, advantageously at least 70 million (7.0×10⁷) cfu of Bacillus amyloliquefaciens/g soil activator composition, more advantageously at least 90 million (9.0×10⁷) cfu of Bacillus amyloliquefaciens/g soil activator composition, even more advantageously at least 100 million (1.0×10⁸) cfu of Bacillus amyloliquefaciens/g soil activator composition, in particular at least 150 million (1.5×10⁸) cfu of Bacillus amyloliquefaciens/g soil activator composition, more particular at least 200 million (2.0×10⁸) cfu of Bacillus amyloliquefaciens/g soil activator composition, even more particular at least 250 million (2.5×10⁸) cfu of Bacillus amyloliquefaciens/g soil activator composition, preferably at least 300 million (3.0×10⁸) cfu of Bacillus amyloliquefaciens/g soil activator composition, more preferably at least 350 million (3.5×10⁸) cfu of Bacillus amyloliquefaciens/g soil activator composition, even more preferably at least 400 million (4.0×10⁸) cfu of Bacillus amyloliquefaciens/g soil activator composition, in particular at least 450 million (4.5×10⁸) cfu of Bacillus amyloliquefaciens/g soil activator composition, even more advantageously at least 500 million (5.0×10⁸) cfu of Bacillus amyloliquefaciens/g soil activator composition, preferably at least 800 million (8.0×10⁸) cfu of Bacillus amyloliquefaciens/g soil activator composition, preferably 900 million (9×10⁸) cfu of Bacillus amyloliquefaciens/g soil activator composition, preferably 1 billion (1×10⁹) cfu of Bacillus amyloliquefaciens/g soil activator composition, preferably 3 billion (3×10⁹) cfu of Bacillus amyloliquefaciens/g soil activator composition, and/or said bacterial mixture of said soil activator composition of said coating contains at least 10 million (1.0×10⁷) cfu of Pseudomonas monteilii/g soil activator composition after said extended shelf life, measured according to ASTM-D5465-93 (dated 1998) standard, preferably at least 15 million (1.5×10⁷) cfu of Pseudomonas monteilii/g soil activator composition, more preferably at least 20 million (2.0×10⁷) cfu of Pseudomonas monteilii/g soil activator composition, even more preferably at least 25 million (2.5×10⁷) cfu of Pseudomonas monteilii/g soil activator composition, in particular at least 30 million (3.0×10⁷) cfu of Pseudomonas monteilii/g soil activator composition, more particular at least 35 million (3.5×10⁷) cfu of Pseudomonas monteilii/g soil activator composition, even more particular at least 40 million (4.0×10⁷) cfu of Pseudomonas monteilii/g soil activator composition, advantageously at least 45 million (4.5×10⁷) cfu of Pseudomonas monteilii/g soil activator composition, more advantageously at least 50 million (5.0×10⁷) cfu of Pseudomonas monteilii/g soil activator composition, even more advantageously at least 55 million (5.5×10⁷) cfu of Pseudomonas monteilii/g soil activator composition, preferably at least 60 million (6.0×10⁷) cfu of Pseudomonas monteilii/g soil activator composition, more preferably at least 65 million (6.5×10⁷) cfu of Pseudomonas monteilii/g soil activator composition, even more preferably at least 70 million (7.0×10⁷) cfu of Pseudomonas monteilii/g soil activator composition, in particular at least 80 million (8.0×10⁷) cfu of Pseudomonas monteilii/g soil activator composition, more particular at least 90 million (9.0×10⁷) cfu of Pseudomonas monteilii/g soil activator composition, even more particular at least 100 million (1.0×10⁸) cfu of Pseudomonas monteilii/g soil activator composition, advantageously at least 200 million (2.0×10⁸) cfu of Pseudomonas monteilii/g soil activator composition, in particular at least 500 million (5.0×10⁸) cfu of Pseudomonas monteilii/g soil activator composition, advantageously at least 800 million (8.0×10⁸) cfu of Pseudomonas monteilii/g soil activator composition, preferably at least 1 billion (1.0×10⁹) cfu of Pseudomonas monteilii/g soil activator composition, advantageously at least 1.5 billion (1.5×10⁹) cfu of Pseudomonas monteilii/g soil activator composition, more advantageously at least 2.0 billion (2.0×10⁹) cfu of Pseudomonas monteilii/g soil activator composition.

5. The coated seed according to any one of preceding claims, wherein said bacterial mixture of said soil activator composition of said coating contains at least 500 million (5.0×10⁸) cfu total bacteria /g soil activator composition after said extended shelf life measured according to ASTM-D5465-93 (dated 1998) standard, preferably at least 700 million (7.0×10⁸) cfu total bacteria /g soil activator composition, more preferably at least 900 million (9.0×10⁸) cfu total bacteria /g soil activator composition, even more preferably at least 1 billion (1.0×10⁹) cfu total bacteria /g soil activator composition, advantageously at least 2 billion (2.0×10⁹) cfu total bacteria /g soil activator composition, more advantageously at least 3 billion (3.0×10⁹) cfu total bacteria /g soil activator composition, even more advantageously at least 4 billion (4.0×10⁹) cfu total bacteria /g soil activator composition, in particular at least 5 billion (5.0×10⁹) cfu total bacteria /g soil activator composition, more particular at least 6 billion (6.0×10⁹) cfu total bacteria /g soil activator composition, even more particular at least 7 billion (7.0×10⁹) cfu total bacteria /g soil activator composition, particularly at least 8 billion (8.0×10⁹) cfu total bacteria /g soil activator composition, more particularly at least 9 billion (9.0×10⁹) cfu total bacteria /g soil activator composition, even more particularly at least 10 billion (1.0×10¹⁰) cfu total bacteria /g soil activator composition, preferably at least 11 billion (1.1×10¹⁰) cfu total bacteria /g soil activator composition, advantageously at least 12 billion (1.2×10¹⁰) cfu total bacteria /g soil activator composition, more advantageously at least 13 billion (1.3×10¹⁰) cfu total bacteria /g soil activator composition, even more advantageously at least 14 billion (1.4×10¹⁰) cfu total bacteria /g soil activator composition, in particular at least 15 billion (1.5×10¹⁰) cfu total bacteria /g soil activator composition, more particular at least 16 billion (1.6×10¹⁰) cfu total bacteria /g soil activator composition, even more particular at least 17 billion (1.7×10¹⁰) cfu total bacteria /g soil activator composition, particularly at least 18 billion (1.8×10¹⁰) cfu total bacteria /g soil activator composition, more particularly at least 19 billion (1.9×10¹⁰) cfu total bacteria /g soil activator composition, even more particularly at least 20 billion (2.0×10¹⁰) cfu total bacteria /g soil activator composition, advantageously at least 25 billion (2.5×10¹⁰) cfu total bacteria /g soil activator composition, in particular at least 50 billion (5.0×10¹⁰) cfu total bacteria /g soil activator composition.

6. The coated seed according to any one of preceding claims, wherein the ratio of cfu of the at least one bacteria species with some antifungal activity/g soil activator composition to total cfu bacteria /g soil activator is at least 0.01, preferably at least 0.02, more preferably at least 0.06, preferably at least 0.1, preferably at least 0.25, preferably at least 0.6 measured according to ASTM-D5465-93 (dated 1998) standard, and/or presenting a relation of cfu of Pseudomonas monteilii to Bacillus subtilis defined as (cfu of Pseudomonas monteilii/cfu of Bacillus subtilis) multiplied by 100 of at least 0.01, preferably at least 0.02, preferably at least 0.04, preferably at least 0.10, preferably at least 0.20, preferably at least 0.30, preferably at least 0.5, preferably at least 0.6, preferably at least 0.70, preferably at least 0.8, preferably at least 1.0, preferably at least 1.5, preferably at least 2.0, preferably at least 2.5, preferably at least 3.0, preferably at least 3.5, preferably at least 4.0, preferably at least 4.5, preferably at least 5.0, preferably at least 5.5, preferably at least 6.0, preferably at least 6.5, preferably at least 7.0, preferably at least 7.5, preferably at least 8.0.

7. The coated seed according to any one of preceding claims, wherein said soil activator composition comprises said bacterial mixture in an amount from 0.2 wt% to 20 wt% with respect to the total weight of said soil activator composition, more preferably from 0.2 wt% to 15 wt%, in particular from 0.2 wt% to 12 wt%, particularly from 0.2 wt% to 10 wt%, advantageously from 0.2 wt% to 8 wt%, advantageously in an amount from 0.2 wt% to 6 wt%, even more advantageously from 0.2 wt% to 5 wt%.

8. The coated seed according to any one of preceding claims, wherein said at least a carrier of said soil activator composition is chosen in the group comprising sodium lignosulfonate, calcium lignosulfonate, ammonium lignosulfonate, maltodextrine, bentonite, diatomite, sepiolite, silicate, corn syrup solids, dextrose, lactose, powdered molasses, calcium phosphate and other rock powders, and their mixture, preferably said carrier is at least one lignosulfonate salt amongst sodium lignosulfonate and calcium lignosulfonate, and/or wherein said soil activator composition comprises said at least a carrier in an amount from 50 wt% to 99.8 wt%, preferably from 55 wt% to 99.8 wt%, more preferably from 60 wt% to 99.8 wt%, advantageously from 65 wt% to 99.8 wt%, more advantageously from 70 wt% to 99.8 wt%, even more advantageously from 75 wt% to 99.8 wt%, in particular from 80 wt% to 99.8 wt%, more particularly from 85 wt% to 99.8 wt%, preferably from 90 wt% to 99.8 wt%, particularly from 92 wt% to 99.8 wt%, for example from 95 wt% to 99.8 wt%.

9. The coated seed according to any one of the preceding claims, wherein said soil activator composition of said coating comprises at least one additive in an amount between 0.1 wt% and 30 wt%, preferably between 0.5 wt% and 30 wt%, preferably between 1.0 wt% and 30 wt%, preferably between 5 wt% and 30 wt%, preferably between 10 wt% and 30 wt%, preferably between 10 wt% and 25 wt%, and/or preferably said at least one additive is selected from the group comprising seaweed powder and other plant-based powdered extracts, humic and/or fulvic acids, natural rock dusts such as wollastonite, basalt, diatomite etc., and their mixture, and/or said at least one additive is selected from the group comprising calcium-based compounds, such as CaO, phosphorus-based compounds, such as P₂O₅, magnesium-based compounds, such as MgO, potassium-based compounds, such as K₂O, nitrogen-based compounds, such as NH₄⁺, sulfur-based compounds, such as SO₄²⁻, and their mixture, preferably said nitrogen is present in an amount from 2 to 6 weight% based on the total weight of the soil activator composition, and/or in said soil activator composition of said coating phosphorus is present in an amount comprised between 0.15 and 0.4 equivalent P₂O₅ weight % based on the total weight of the soil activator composition, and/or in said soil activator composition of said coating potassium is present in an amount between 0.15 and 0.4 equivalent K₂O weight % based on the total weight of the soil activator composition, and/or in said soil activator composition of said coating sulphur is present in an amount comprised between 2 to 8 weight % based on the total weight of the soil activator composition, and/or in said soil activator composition of said coating calcium is present between 0.1 and 0.2 equivalent CaO weight % based on the total weight of the soil activator composition, and/or in said soil activator composition of said coating magnesium is present in an amount comprised between 0.05 and 0.1 equivalent MgO weight % based on the total weight of the soil activator composition.

10. The coated seed according to any one of preceding claims, wherein said at least a binding agent of said coating is chosen from the group comprising mineral oil, water, vegetable oil, crude glycerin, natural or biobased polymers, and their mixture.

11. The coated seed according to any one of preceding claims, wherein said at least a coating presents a thickness comprised between 30 nanometers and 3 millimeters, preferably comprised between 1 µm and 2 mm, and/or wherein said at least a coating represents an increase of the weight of said at least a seed comprised between 0.1% and 5000%.

12. The coated seed according to any one of preceding claims, presenting a surface friction comprised of friction coefficients between 0.2 and 0.7, preferably between 0.4 and 0.6 when subjected to forces ranging from 50 mN to 150 mN.

13. The coated seed according to any one of preceding claims, wherein said soil activator composition of said at least a coating presents a solubility higher than or equal to 250 grams per Liter (g/L) at 25°C, preferably up to 500 g/L at 25°C, and/or wherein said coating increases the moisture level of the said seed by less than 1 weight% and preferably less than 0.5%.

14. Method for preparing a coated seed according to any one of the claims 1 to 13, comprising the following steps:
- Preparing a bacterial mixture with lyophilized bacteria by dosing the at least a rhizobacteria to reach at least 2.55 billion (2.55×10⁹) cfu rhizobacteria /g soil activator composition, measured according to ASTM-D5465-93 (dated 1998) standard and the at least a bacteria with some antifungal activity to reach at least 2 billion (2×10⁹) cfu of at least a bacteria with some antifungal activity /g soil activator composition measured according to ASTM-D5465-93 (dated 1998) standard, and
- Mixing said bacterial mixture with at least a carrier chosen in the group comprising sodium lignosulfonate, calcium lignosulfonate, ammonium lignosulfonate, maltodextrine, bentonite, diatomite, sepiolite, silicate, corn syrup solids, dextrose, lactose, powdered molasses, calcium phosphate and other rock powders, and their mixture, to form said soil activator composition,
- Combining, in a mixer, said soil activator composition with at least a seed chosen in the group comprising seed of cotton, seed of maize/corn, seed of soybean, seed of rice, seed of sunflower, seed of tomato, seed of wheat, and at least a binding agent, either by mixing said soil activator composition with said at least binding agent and then blending said blend of binding agent and soil activator composition with the at least a seed, or by mixing the soil activator composition with the at least a seed and then adding said at least binding agent,
- Blending the mix for a predetermined period of time, preferably between 1 and 15 minutes, in particular between 1 and 10 minutes, more particular between 2 and 5 minutes, or until all seeds are evenly coated, to obtain said coated seed.

15. Utilization of said coated seed according to any one of claims 1 to 13, or said coated seed obtained according to claim 14, to improve the germination of said seed and/or to improve plant growth rate from said seed and/or to improve roots growth rate from said seed.
